# EUROPEAN PATENT APPLICATION

(11) **EP 4 535 305 A1**
(43) Date of publication of application: **09.04.2025**
(21) Application number: 23830118.8
(22) Date of filing: 25.06.2023
(51) Int. Cl.: G06V 20/58, G06V 30/14, G06T 5/50, G06T 7/70, G06F 16/29, G06F 16/687

(54) **VEHICLE SEARCHING METHOD AND APPARATUS, AND ELECTRONIC DEVICE**

(30) Priority: 01.07.2022 CN 202210774898
(71) Applicant: Shenzhen Yinwang Intelligent Technologies Co., Ltd., Shenzhen, Guangdong 518129 (CN)
(72) Inventor: LIAO, Xiaofeng, Shenzhen, Guangdong 518129 (CN); TANG, Qiuyuan, Shenzhen, Guangdong 518129 (CN); JIN, Zhou, Shenzhen, Guangdong 518129 (CN); YANG, Jinghuan, Shenzhen, Guangdong 518129 (CN); WANG, Xiaoyue, Shenzhen, Guangdong 518129 (CN)
(74) Representative: Gill Jennings & Every LLP
(86) International application number: PCT/CN2023/102061
(87) International publication number: WO 2024/001940

(57) **Abstract**

This application provides a vehicle searching method and apparatus, and an electronic device. The method may include: receiving parking location information of a vehicle, where the parking location information includes parking space number information of a parking location of the vehicle; and receiving a first instruction, and controlling display of the parking location of the vehicle according to the first instruction, where the parking location includes a parking space number indicated by the parking space number information. This application may be applied to a vehicle searching field of an intelligent vehicle or an electric vehicle, and helps improve vehicle searching efficiency and accuracy of a user, to improve user experience.

## Description

This application claims priority to Chinese Patent Application No. 202210774898.2, filed with the China National Intellectual Property Administration on July 1, 2022 and entitled "VEHICLE SEARCHING METHOD AND APPARATUS, AND ELECTRONIC DEVICE", which is incorporated herein by reference in its entirety.

### TECHNICAL FIELD

Embodiments of this application relate to the field of intelligent vehicle searching, and more specifically, to a vehicle searching method and apparatus, and an electronic device.

### BACKGROUND

With rapid development of intelligent vehicles, people have increasingly stronger demands for searching a vehicle in a large underground parking lot. However, terrains of large parking lots are complex, and signal strength of a global positioning system (global positioning system, GPS) is weak in some underground parking lots. As a result, a vehicle location cannot be accurately located, and a user usually can only manually take a photo to assist in searching for a vehicle. In an entire interaction process, the user needs to open a vehicle searching page of a vehicle owner application (application, app) by using a mobile phone, view an environment image fed back by the vehicle, and find the vehicle of the user based on an understanding of the environment image. The user's understanding of the image may be incorrect, which further leads to an error in determining a parking location of the vehicle, affecting vehicle searching efficiency and user experience.

### SUMMARY

Embodiments of this application provide a vehicle searching method and apparatus, and an electronic device, to help improve vehicle searching efficiency of a user, and improve vehicle searching experience of the user.

According to a first aspect, a vehicle searching method is provided. The method may be performed by an electronic device, or may be performed by a chip or a circuit used for the electronic device. This is not limited in this application. For ease of description, the following uses an example in which the method is performed by the electronic device for description. The electronic device may be a terminal device like a mobile phone, a tablet computer, or a watch.

The method may include: receiving parking location information of a vehicle, where the parking location information includes parking space number information of a parking location of the vehicle; and receiving a first instruction, and controlling display of the parking location of the vehicle according to the first instruction, where the parking location includes a parking space number indicated by the parking space number information.

**In** the foregoing technical solution, the parking location of the vehicle, especially the parking space number, can be directly displayed to a user according to the first instruction. This reduces interaction steps between the user and the electronic device (a vehicle searching apparatus) in a vehicle searching process, and improves vehicle searching efficiency. In addition, in the foregoing technical solution, the user does not need to determine the vehicle location based on an image displayed on the electronic device, and can directly find the vehicle location based on the parking space number displayed on a user interface. This can improve vehicle searching accuracy of the user, and helps improve user experience.

For example, the method may be performed by a first electronic device. In this case, the parking location information of the vehicle may be received from the vehicle or a cloud. Alternatively, the parking location information of the vehicle may be received from a second electronic device. The first electronic device and/or the second electronic device are/is associated with the vehicle, and the first electronic device is associated with the second electronic device. The foregoing "associated" may include that accounts for logging in to the two devices are the same. Alternatively, although accounts for logging in to the two devices are different, both are accounts of authorized users of a same vehicle. Alternatively, at least one of the two devices may receive information shared by an authorized user of the vehicle, and therefore an association relationship is established between the two devices.

For example, an account for logging in to the first electronic device and/or the second electronic device and an account for logging in to the vehicle are a same mobile phone number. For another example, although an account for logging in to the first electronic device and an account for logging in to the vehicle are different mobile phone numbers, the two mobile phone numbers are registered by using a same identification number. For another example, authorized users of the vehicle include a user A, a user B, and a user C. In this case, an account for logging in to the first electronic device may be an account of the user A, an account for logging in to the second electronic device may be an account of the user B, and an account for logging in to the vehicle may be an account of the user C. For another example, both an account for logging in to the second electronic device and an account for logging in to the vehicle are accounts of authorized users of the vehicle, and an account for logging in to the first electronic device is an account of another user (namely, an unauthorized user of the vehicle). In this case, when the first electronic device receives parking location information of the vehicle shared by the second electronic device, it is considered that the first electronic device is associated with the second electronic device.

In some possible implementations, when a plurality of pieces of parking location information are cached, the parking location of the vehicle may be determined and displayed based on parking location information received and/or cached at a moment closest to a current moment.

In some possible implementations, the first instruction may include but is not limited to the following instructions.

First is a voice instruction for searching for the vehicle by the user. For example, the electronic device may obtain an audio of the voice instruction through a sound sensor, and obtain voice semantics of "Intelligent assistant, where is the vehicle currently" through parsing by using a processing apparatus.

Second is an instruction generated based on an input for a screen of the electronic device. For example, when the electronic device shows a home screen page, and a touch sensor detects a swipe-right signal on the screen of the electronic device, an instruction for controlling the electronic device to switch from the home screen page to an intelligent assistant interface (for example, a leftmost screen interface) is generated based on the swipe-right signal. Alternatively, when the electronic device shows a home screen page, and a touch sensor detects a swipe-down signal on the screen of the electronic device, an instruction for controlling the electronic device to switch from the home screen page to a swipe-down notification bar interface is generated based on the swipe-down signal. Alternatively, when a touch sensor detects a tap signal of an icon of a vehicle owner app on the screen of the electronic device, an instruction for controlling the electronic device to display a display interface of the vehicle owner app is generated based on the tap signal. It should be understood that the vehicle owner app may include an application that provides vehicle control for an authorized user of the vehicle, and/or an application that provides a service like vehicle status information learning for the authorized user of the vehicle.

Third is an instruction generated based on an operation on a physical button of the electronic device. For example, when a pressure sensor of the electronic device collects a press signal, a processing apparatus (for example, a processor) of the electronic device may process the press signal and perform corresponding control. For example, the processing apparatus of the electronic device may generate, based on the press signal, an instruction for controlling the electronic device to display the parking location of the vehicle. Alternatively, when a torque sensor of the electronic device collects a torque signal, a processing apparatus of the electronic device may process the torque signal and perform corresponding control. For example, the electronic device may generate, based on the torque signal, an instruction for controlling the electronic device to display the parking location of the vehicle.

In some possible implementations, the parking location that is of the vehicle and that is controlled to be displayed according to the first instruction further includes a geographical location of the parking location, for example, a longitude and a latitude of the parking location, or an address of the parking location, for example, an address of a parking lot in which the vehicle is located.

With reference to the first aspect, in some implementations of the first aspect, the method further includes: receiving a second instruction, and controlling, according to the second instruction, display of a first image of a parking space in which the vehicle is located, where the first image includes the parking space number.

For example, "the first image includes the parking space number" may be understood as "the first image includes image information of the parking space number".

In some possible implementations, the second instruction and the first instruction may be different instructions, or may be a same instruction.

For example, when the first instruction is the instruction that is generated based on the tap signal detected by the touch sensor and that controls the electronic device to display the display interface of the vehicle owner app, the second instruction and the first instruction may be a same instruction. In other words, according to the second instruction, the display interface of the vehicle owner app is controlled to display the first image of the parking space in which the vehicle is located.

For another example, when the first instruction is the instruction generated based on the signal (for example, the swipe-right signal or the swipe-down signal) detected by the touch sensor, the second instruction and the first instruction may be different instructions. In the foregoing case, the second instruction may be an instruction generated based on a tap signal detected by the touch sensor in a first area of the screen of the electronic device, where the first area may be an area on the leftmost screen interface or the swipe-down notification bar interface, and the first area is used to display the parking location of the vehicle in a text form. Further, the electronic device displays the first image in the first area according to the second instruction.

In the foregoing technical solution, an image of the parking space in which the vehicle is located can be provided to the user according to the second instruction, so that the user can determine a specific parking location of the vehicle with reference to the parking space number and the image of the parking space, to provide the user with a clearer presentation of the parking location. In addition, the user can perform recognition in a scenario in which an image recognition error occurs. This further improves accuracy of parking space recognition and helps improve vehicle searching efficiency.

With reference to the first aspect, in some implementations of the first aspect, the method further includes: controlling display of a first text and a first image according to the first instruction, where the first text includes an address of the parking location, or the first text includes an address of the parking location and the parking space number, and the first image includes a parking space in which the vehicle is located.

For example, according to the first instruction, the intelligent assistant interface (for example, the leftmost screen interface) or a notification interface (for example, the swipe-down notification bar interface) is controlled to push the first text and the first image through a service account or a notification card.

With reference to the first aspect, in some implementations of the first aspect, the first image includes an image obtained by performing distortion correction on one or more images obtained by a sensor of the vehicle.

In some possible implementations, due to a reason of a camera or another factor, an image shot by the vehicle may be greatly distorted. To improve image visibility and ensure vehicle searching accuracy of the user, distortion correction may be performed on the image. It should be noted that the distortion correction may be performed by the vehicle, or may be performed by the electronic device. This is not specifically limited in this application.

With reference to the first aspect, in some implementations of the first aspect, the parking space number included in the first image is displayed in an art font.

In some possible implementations, a parking space image may not include the parking space number, or the parking space number in a parking space image is not completely displayed. In this case, the parking space number may be displayed in an art font in the first image.

In some possible implementations, the parking space image includes only a parking space number that originally exists in the parking space (for example, a parking space number displayed by spraying). However, when a parking lot in which the parking space is located has a plurality of areas and/or floors, the parking space number including an area number and/or a floor number may be displayed in an art font. For example, the parking lot includes three areas A, B, and C, and each of the three areas has a parking space whose parking space number is "616". If the parking space image includes only a character "616" displayed by spraying, the user cannot learn which area the parking space "616" is in. In this case, an area and/or a floor where the parking space is located and the parking space number may be displayed in an art font in the first image, for example, "B3-C-616", "C-616", "B3-616", or "area xx-312", where B3 represents a floor, C represents an area, and 616 represents a number of the parking space.

It should be understood that an "art font" in this application includes a text added to an image by using a computer technology.

With reference to the first aspect, in some implementations of the first aspect, the method further includes: when receiving the first instruction, controlling a display interface to switch from a first interface to a second interface; and displaying the parking location on the second interface.

In some possible implementations, the first instruction may include the instruction generated based on the input for the screen of the electronic device. The first interface is the home screen page of the electronic device, and the second interface is the leftmost screen interface or the swipe-down notification bar interface.

In the foregoing technical solution, the parking location of the vehicle may be displayed to the user in response to a one-step operation of the user. This helps the user quickly obtain effective information and saves time required for searching for the vehicle.

With reference to the first aspect, in some implementations of the first aspect, the second interface includes one or more cards, and the parking location is displayed in one of the one or more cards.

In some possible implementations, the foregoing "card" may also be understood as an area on an interface. The area is associated with a function of the electronic device, and is used to display information related to the function. Alternatively, the area is associated with an application, and is used to display a push notification or related information of the application.

In the foregoing technical solution, the parking location of the vehicle is displayed by using a card on the leftmost screen interface or the swipe-down notification bar interface. This can not only reduce interactions between the user and the electronic device in the vehicle searching process, but also save resources required by the electronic device to push the parking location of the vehicle. This helps reduce power consumption of the electronic device.

With reference to the first aspect, in some implementations of the first aspect, the method further includes: receiving a third instruction; and the controlling display of the parking location of the vehicle according to the first instruction includes: controlling, according to the first instruction, a display interface of a first application to display the parking location, where the parking location includes a second image indicating environmental information around the parking location; and switching, according to the third instruction, the second image displayed on the display interface of the first application.

For example, the third instruction may include an instruction generated based on an input for the display interface of the first application. For example, the third instruction may be an instruction generated based on a swipe-left or swipe-right signal detected by a touchscreen sensor in a second area, where the second area is an area on the display interface of the first application.

For example, the second image may include at least one of a digital video recorder DVR image, a vehicle surround-view image, and a parking space image around the parking location of the vehicle. Further, according to the third instruction, the electronic device may switch the DVR image displayed on the display interface of the first application to the vehicle surround-view image, or switch the vehicle surround-view image displayed on the display interface of the first application to the DVR image, or switch the DVR image displayed on the display interface of the first application to the parking space image.

In the foregoing technical solution, more related information of the parking location of the vehicle can be provided for the user. In particular, when a parking lot environment is complex, a combination of a plurality of images and text information of the parking location helps the user to quickly and accurately locate the parking location of the vehicle, save time, and improve vehicle searching experience of the user.

With reference to the first aspect, in some implementations of the first aspect, the second image includes an image obtained by splicing a plurality of images obtained by a sensor of the vehicle.

In some possible implementations, if one image obtained by the vehicle may display all effective information, splicing processing may be performed on the plurality of images obtained by the vehicle, to restore information in an image that does not display all effective information. It should be understood that the foregoing "effective information" includes the environmental information required in the vehicle searching process of the user.

With reference to the first aspect, in some implementations of the first aspect, the method further includes: receiving a fourth instruction, and controlling, according to the fourth instruction, the display interface of the first application to display information about a track between a first position and the vehicle.

For example, the fourth instruction may include an instruction generated based on an input for the display interface of the first application. For example, the fourth instruction may be an instruction generated based on a tap signal that is for a second control and that is detected by the touchscreen sensor. The second control includes a control that controls generation of the information about the track, or the second control includes a control for enabling navigation.

In some possible implementations, the first position may be a location of the electronic device, or may be a location of the user who needs to use the vehicle.

In some possible implementations, the information about the track between the first position and the vehicle may include one or more tracks from the first position to a location of the vehicle. The information about the track may further include information such as a plurality of navigation manners, time required for reaching a destination, and a quantity of passing traffic lights. In some possible implementations, the information about the track further includes a track from a specific entrance of the parking lot in which the vehicle is parked to the parking space of the vehicle.

In the foregoing technical solution, the information about the track between the first position and the vehicle is displayed, which helps the user who is searching for the vehicle quickly reach the parking space in which the vehicle is parked, thereby improving vehicle searching efficiency.

With reference to the first aspect, in some implementations of the first aspect, the display interface of the first application includes a first control, and the method further includes: receiving a fifth instruction for the first control, where the first control is associated with a second application; and controlling, according to the fifth instruction, a display interface of the second application to display the information about the track between the first position and the vehicle.

For example, the fifth instruction may include an instruction generated based on an input for the first control. For example, the fifth instruction may be an instruction generated based on a tap signal that is for the first control and that is detected by the touchscreen sensor. The first control may include a control for enabling navigation, or the first control may include an icon of the second application.

Further, the electronic device switches to the display interface of the second application according to the fifth instruction to display the information about the track. For example, the second application may include one or more map applications.

With reference to the first aspect, in some implementations of the first aspect, the method further includes: receiving a sixth instruction, and sending shared information to a first object according to the sixth instruction, where when the first object is an authorized user of the vehicle, the shared information includes the parking location; or when the first object is an unauthorized user of the vehicle, the shared information includes a part of information of the parking location.

For example, the sixth instruction may include an instruction generated based on an input for the display interface of the first application. For example, the sixth instruction may be an instruction generated based on a tap signal that is for a third control and that is detected by the touchscreen sensor. The third control includes a control for controlling information sharing.

In some possible implementations, when the first object is the authorized user of the vehicle, all parking information of the vehicle, including a geographical parking location of the vehicle, the parking space number of the parking space of the vehicle, an image of the parking lot shot by the vehicle at the parking location, the vehicle surround-view image, and the image of the parking space in which the vehicle is parked, may be sent. When the first object is the unauthorized user of the vehicle, only a part of parking information of the vehicle, for example, a geographical parking location of the vehicle, may be sent.

In the foregoing technical solution, the parking location of the vehicle may be shared with another user, and different sharing permissions are set for different sharing objects. This helps ensure privacy information of the user and improve security of personal information.

With reference to the first aspect, in some implementations of the first aspect, the parking location further includes at least one of a number of a floor on which the vehicle is parked and a number of an area in which the vehicle is parked.

In the foregoing technical solution, when the parking lot in which the vehicle is parked has a plurality of areas and/or a plurality of floors, a number of a floor on which the vehicle is parked and/or a number of an area in which the vehicle is parked may be displayed, to help the user quickly locate the parking space in which the vehicle is parked, thereby improving vehicle search efficiency.

With reference to the first aspect, in some implementations of the first aspect, the method further includes: controlling, according to the fourth instruction, the display interface of the first application to display a first animation, where the first animation is used to prompt that intelligent vehicle searching is enabled.

For example, "intelligent vehicle searching" in this application may be understood as a function provided by a vehicle searching app. The function may include but is not limited to a navigation function, a function of displaying a vehicle parking location and a surrounding image, and a function of displaying geographical information of the vehicle parking location.

In the foregoing technical solution, when the user enables the intelligent vehicle searching function, an animation is used to notify the user that the intelligent vehicle searching is enabled. This helps improve a sense of technology experienced by the user in the vehicle searching process.

According to a second aspect, a vehicle searching apparatus is provided. The apparatus may include: a first transceiver unit, configured to receive parking location information of a vehicle, where the parking location information includes parking space number information of a parking location of the vehicle; a second transceiver unit, configured to receive a first instruction; and a processing unit, configured to control display of the parking location of the vehicle according to the first instruction, where the parking location includes a parking space number indicated by the parking space number information.

With reference to the second aspect, in some implementations of the second aspect, the second transceiver unit is further configured to receive a second instruction; and the processing unit is further configured to control, according to the second instruction, display of a first image of a parking space in which the vehicle is located, where the first image includes the parking space number.

With reference to the second aspect, in some implementations of the second aspect, the processing unit is specifically configured to: control display of a first text and a first image according to the first instruction, where the first text includes an address of the parking location, or the first text includes an address of the parking location and the parking space number, and the first image includes a parking space in which the vehicle is located.

With reference to the second aspect, in some implementations of the second aspect, the processing unit is specifically configured to: when receiving the first instruction, control a display interface to switch from a first interface to a second interface; and display the parking location on the second interface.

With reference to the second aspect, in some implementations of the second aspect, the second interface includes one or more cards, and the parking location is displayed in one of the one or more cards.

With reference to the second aspect, in some implementations of the second aspect, the second transceiver unit is further configured to receive a third instruction; and the processing unit is specifically configured to: control, according to the first instruction, a display interface of a first application to display the parking location, where the parking location includes a second image indicating environmental information around the parking location; and switch, according to the third instruction, the second image displayed on the display interface of the first application.

With reference to the second aspect, in some implementations of the second aspect, the second transceiver unit is further configured to: receive a fourth instruction; and the processing unit is further configured to control, according to the fourth instruction, the display interface of the first application to display information about a track between a first position and the vehicle.

With reference to the second aspect, in some implementations of the second aspect, the display interface of the first application includes a first control, and the second transceiver unit is further configured to: receive a fifth instruction for the first control, where the first control is associated with a second application; and the processing unit is further configured to control, according to the fifth instruction, a display interface of the second application to display the information about the track between the first position and the vehicle.

With reference to the second aspect, in some implementations of the second aspect, the second transceiver unit is further configured to: receive a sixth instruction; and the processing unit is further configured to send shared information to a first object according to the sixth instruction, where when the first object is an authorized user of the vehicle, the shared information includes the parking location; or when the first object is an unauthorized user of the vehicle, the shared information includes a part of information of the parking location.

With reference to the second aspect, in some implementations of the second aspect, the parking location further includes at least one of a number of a floor on which the vehicle is parked and a number of an area in which the vehicle is parked.

With reference to the second aspect, in some implementations of the second aspect, the processing unit is configured to: control, according to the fourth instruction, the display interface of the first application to display a first animation, where the first animation is used to prompt that intelligent vehicle searching is enabled.

With reference to the second aspect, in some implementations of the second aspect, the first image includes an image obtained by performing distortion correction on one or more images obtained by a sensor of the vehicle.

With reference to the second aspect, in some implementations of the second aspect, the parking space number included in the first image is displayed in an art font.

With reference to the second aspect, in some implementations of the second aspect, the second image includes an image obtained by splicing a plurality of images obtained by a sensor of the vehicle.

According to a third aspect, an electronic device is provided. The electronic device includes: a memory, configured to store a program; and a processor, configured to execute the program stored in the memory. When the program stored in the memory is executed, the processor is configured to perform the method in any possible implementation of the first aspect.

According to a fourth aspect, a vehicle searching system is provided. The system includes the apparatus according to any one of the second aspect or the electronic device according to any one of the third aspect, and a vehicle.

According to a fifth aspect, a computer program product is provided. The computer program product includes computer program code. When the computer program code is run on a computer, the computer is enabled to perform the method in any possible implementation of the first aspect.

It should be noted that all or some of the computer program code may be stored in a first storage medium. The first storage medium may be encapsulated together with a processor, or may be encapsulated separately from a processor. This is not specifically limited in embodiments of this application.

According to a sixth aspect, a computer-readable medium is provided. The computer-readable medium stores program code. When the computer program code is run on a computer, the computer is enabled to perform the method in any possible implementation of the first aspect.

According to a seventh aspect, a chip is provided. The chip includes a processor, configured to invoke a computer program or computer instructions stored in a memory, so that the processor performs the method in any possible implementation of the first aspect.

With reference to the seventh aspect, in a possible implementation, the processor is coupled to the memory through an interface.

With reference to the seventh aspect, in a possible implementation, the chip system further includes a memory. The memory stores a computer program or computer instructions.

According to the vehicle searching method and apparatus, and the electronic device provided in this application, the parking location of the vehicle can be directly provided for the user in response to an instruction or an operation of the user, for example, the parking location of the vehicle is displayed to the user by using a leftmost screen or a swipe-down notification bar of the electronic device. This can reduce interaction steps between the user and the electronic device in the vehicle searching process, and improve vehicle searching efficiency. In addition, in the vehicle searching method provided in this application, the user does not need to determine the vehicle location based on an image displayed by the electronic device. This can resolve a problem of poor vehicle searching accuracy caused by human misdetermining, and help improve user experience. When the parking lot in which the vehicle is parked has a plurality of areas and/or a plurality of floors, a number of a floor on which the vehicle is parked and/or a number of an area in which the vehicle is parked may be displayed, to help the user quickly locate the parking space in which the vehicle is parked, thereby improving vehicle search efficiency. Further, an image of an environment around the parking location of the vehicle may be further displayed to the user, so that the user can quickly determine, with reference to the parking location of the vehicle and the image of the environment around the parking location, the parking location of the vehicle. In particular, when a parking lot environment is complex, a combination of a plurality of images and text information of the parking location helps the user to quickly and accurately locate the parking location of the vehicle, save time, and improve vehicle searching experience of the user.

### BRIEF DESCRIPTION OF DRAWINGS

FIG. 1 is a schematic diagram of a hardware architecture of an electronic device according to an embodiment of this application;
FIG. 2 is a schematic diagram of a software architecture of an electronic device according to an embodiment of this application;
FIG. 3 is a schematic diagram of an information exchange scenario according to an embodiment of this application;
FIG. 4 is a schematic diagram of a vehicle parking scenario according to an embodiment of this application;
FIG. 5 is a schematic flowchart of a method for exchanging parking location information according to an embodiment of this application;
FIG. 6(a) to FIG. 6(c) show a group of GUIs according to an embodiment of this application;
FIG. 7(a) to FIG. 7(c) show another group of GUIs according to an embodiment of this application;
FIG. 8(a) to FIG. 8(c) show another group of GUIs according to an embodiment of this application;
FIG. 9(a) to FIG. 9(c) show another group of GUIs according to an embodiment of this application;
FIG. 10(a) to FIG. 10(c) show another group of GUIs according to an embodiment of this application;
FIG. 11 shows another group of GUIs according to an embodiment of this application;
FIG. 12 is a schematic diagram of a group of parking space images according to an embodiment of this application;
FIG. 13 is a schematic flowchart of a vehicle searching method according to an embodiment of this application;
FIG. 14 is a schematic block diagram of a vehicle searching apparatus according to an embodiment of this application;
FIG. 15 is a schematic block diagram of a vehicle searching apparatus according to an embodiment of this application; and
FIG. 16 is a schematic block diagram of a vehicle searching apparatus according to an embodiment of this application.

### DESCRIPTION OF EMBODIMENTS

The following describes technical solutions of this application with reference to accompanying drawings.

The technical solutions of embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a new radio (new radio, NR) system.

A terminal device in embodiments of this application may be user equipment, an access terminal, a subscriber unit, a subscriber station, a mobile station, a mobile console, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in an evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in a GSM system or CDMA, a NodeB (NodeB, NB) in a wideband code division multiple access WCDMA system, an evolved NodeB (evolved NodeB, eNB or eNodeB) in an LTE system, or a radio controller in a cloud radio access network (cloud radio access network, CRAN) scenario. Alternatively, the network device may be a relay station, an access point, a vehicle-mounted device, a wearable device, a network device in a 5G network, a network device in an evolved PLMN network, or the like. This is not limited in embodiments of this application.

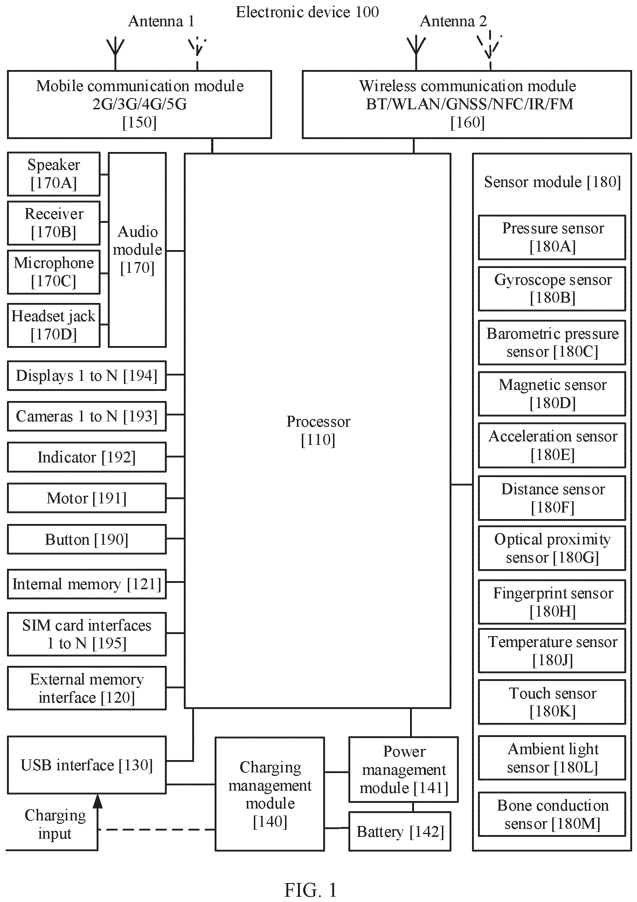

The following first describes an electronic device applicable to this application with reference to FIG. 1.

For example, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement an image shooting function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing an audio through the headset. The interface may altematively be configured to connect to another electronic device, like an augmented reality (augmented reality, AR) device.

It may be understood that an interface connection relationship between modules illustrated in embodiments of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include GSM, GPRS, CDMA, WCDMA, time-division code division multiple access (time-division code division multiple access, TD-SCDMA), LTE, BT, GNSS, WLAN, NFC, FM, and/or IR technologies. The GNSS may include a GPS, a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like red green and blue (red green and blue, RGB). In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The intemal memory 121 may be configured to store computer-executable program code. The executable program code includes instructions. The processor 110 runs the instructions stored in the intemal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and recognize a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an icon of Messages, an instruction for viewing an SMS message is performed. When a touch operation whose touch operation intensity is greater than or equal to the first pressure threshold is performed on the icon of Messages, an instruction for creating an SMS message is performed.

The touch sensor 180K is also referred to as a "touch panel". The touch sensor 180K may be disposed on the display 194. A touchscreen formed by the touch sensor 180K and the display 194 is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external storage card. The electronic device 100 interacts with a network through the SIM card, to implement functions such as calling and data communication. In some embodiments, the electronic device 100 uses an embedded SIM (embedded-SIM, eSIM) card, namely, an embedded SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM), a universal integrated circuit card (universal integrated circuit card, UICC), and the like.

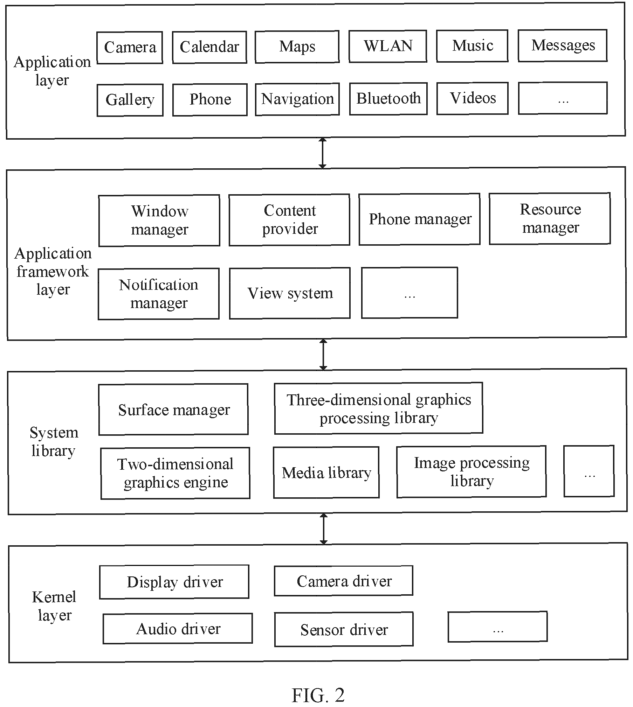

As shown in FIG. 2, an application package may include applications such as Camera, Gallery, Calendar, Phone, Maps, Navigation, WLAN, Bluetooth, Music, Videos, and Messages.

An application framework layer provides an application programming interface (application programming interface, API) and a programming framework for an application at an application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, advanced audio coding (advanced audio coding, AAC), adaptive multi-rate (adaptive multi-rate, AMR), joint photographic experts group (joint photographic experts group, JPG), and portable network graphics (portable network graphics, PNG).

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be used in systems such as an Android operating system, an iPhone operating system (iPhone operating system, iOS), and a Harmony operating system.

In some possible implementations, the electronic device 100 may include various handheld devices having a wireless communication function, a wearable device, a computing device or another processing device connected to a wireless modem, various forms of terminals, mobile stations, user equipment, and the like, for example, a watch, a band, a wireless headset, or an electronic wallet. This is not limited in embodiments of this application.

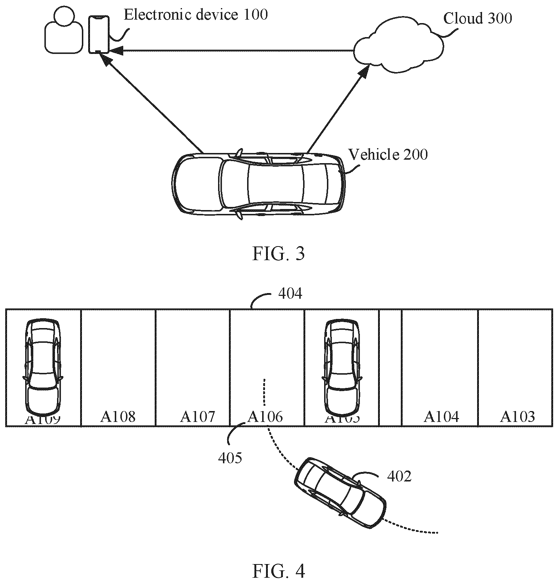

The foregoing describes diagrams of hardware and software architectures of an electronic device applicable to this application with reference to FIG. 1 and FIG. 2. The following describes in detail a vehicle searching method according to embodiments of this application with reference to FIG. 3 to FIG. 13.

As mentioned above, with rapid development of intelligent vehicles, people have increasingly stronger demands for searching a vehicle in a large underground parking lot. However, terrains of large parking lots are complex, and signal strength of a GPS is weak in some underground parking lots. As a result, a vehicle location cannot be accurately located. In a current technical background, in a process of searching for a vehicle by using a mobile phone, a user needs to take a photo to record a location of the vehicle, and needs to understand the photo to find the vehicle of the user. The user's understanding of the photo may be greatly different from the actual vehicle location. This reduces vehicle searching efficiency. In view of this, embodiments of this application provide a vehicle searching method and apparatus, and an electronic device, so that a parking location of a vehicle can be directly provided for a user by using the electronic device, and the user does not need to determine the vehicle location. This can improve vehicle searching efficiency and user experience of the user.

It should be understood that a vehicle owner in embodiments of this application is an authorized user of the vehicle, and a vehicle owner app is an app that provides services such as vehicle control and vehicle status information learning for the authorized user of the vehicle.

FIG. 3 is a schematic diagram of information exchange according to an embodiment of this application. As shown in FIG. 3, a vehicle 200 may send parking information of the vehicle to an electronic device 100 by using near field communication, for example, a Wi-Fi technology, a BT technology, or an NFC technology. Alternatively, a vehicle 200 may send parking information of the vehicle to an electronic device 100 through a cellular network. Alternatively, a vehicle 200 may send parking information of the vehicle to a cloud 300. Further, an electronic device 100 may obtain parking location information of the vehicle from the cloud 300. The parking location information of the vehicle includes but is not limited to an address of a parking location of the vehicle and parking space number information, where the parking space number information may include a number of a parking space of the vehicle or an area number and/or a floor number of a parking space of the vehicle, and image information of a surrounding environment of the vehicle, including at least one of a digital video recorder (digital video recorder, DVR) image, a surround-view image, and a parking space image shot by the vehicle.

In some possible implementations, the parking location information of the vehicle may be determined by the vehicle 200. For example, a geographical parking location of the vehicle may be determined by the vehicle based on a GNSS signal. For example, the geographical location of the vehicle may be determined based on longitude and latitude information included in the GNSS signal.

In some possible implementations, when a parking lot in which the vehicle is parked has only one floor but includes a plurality of areas, in a process in which the vehicle travels to a parking space, one or more images may be obtained by using a sensor. Then, an area number and/or a parking space number of the parking space of the vehicle are/is determined based on the one or more images. For example, in a process in which the vehicle enters the parking space, when one or more images captured by a vehicle-mounted camera include an area number, an area in which the vehicle is parked may be determined based on the one or more images; and/or when the one or more images captured by the vehicle-mounted camera include a parking space number, a parking space number of the parking space of the vehicle may be determined based on the one or more images.

A parking scenario shown in FIG. 4 is used as an example. In a process in which a vehicle 402 enters a parking space 404 from a current location, an image shot by using a rear camera of the vehicle 402 may include a complete "area-parking space number", namely, "A106" shown in 405 (where "A" may represent a parking area). In this case, the vehicle 402 may determine, with reference to a GNSS signal, vehicle parking information, namely, a geographical parking location of the vehicle, an area in which the parking space is located, and a parking space number.

In an implementation, in the process in which the vehicle 402 enters the parking space 404 from the current location, none of shot images may include the complete "area-parking space number". In this case, a parking area and/or a parking space number may be determined based on a plurality of images shot by the vehicle from entering a parking lot to entering the parking space 404. For example, a number of a target parking space (the parking space 404 shown in FIG. 4) may be determined based on a plurality of images captured by a camera of the vehicle in first duration. For example, characters "A10" and "106" are characters of parking space numbers in two consecutive images shot by the camera. In this case, the number "A106" of the target parking space may be determined by using a continuous optical character recognition (optical character recognition, OCR) fusion recognition method. In other words, based on the plurality of images collected by a camera sensor in the first duration, information that cannot be obtained from a single image may be obtained by fusing the plurality of images, so that accuracy of recognition of parking space information can be improved. For example, the first duration may be 5 seconds or 10 seconds, or may be other duration. This is not limited in embodiments of this application. For another example, in a traveling process of the vehicle, a parking space number of a parking space of the vehicle may be determined through image splicing and the like based on data collected by a surround view system.

In an implementation, the parking lot has a plurality of areas, but an area in which the parking space is located is not marked at the parking space. In other words, only the parking space number is marked at the parking space. In this case, the vehicle may determine, based on information such as a character on a column that is shot in a process in which the vehicle travels to the parking space, and/or a character on a wall of a passage through which the vehicle passes, the area in which the parking location of the vehicle is located. Further, the vehicle may determine the vehicle parking information based on one or more images and the GNSS signal, namely, the geographical parking location of the vehicle, the area in which the parking space is located, and the parking space number.

In some possible implementations, when the parking lot in which the vehicle is parked has a plurality of floors, the vehicle may determine, based on pitch angle information of the vehicle in a process from entering the parking lot to entering the parking space, a floor on which the vehicle is parked, and/or determine, based on one or more images obtained by a sensor of the vehicle during traveling, the floor on which the vehicle is parked. In addition, the vehicle may further determine the area number and/or the parking space number of the parking space of the vehicle based on one or more images obtained during parking. For a process of determining the area number and/or the parking space number of the parking space of the vehicle based on the one or more images, refer to the descriptions in the foregoing embodiments. Details are not described herein again.

For example, the determining, based on pitch angle information of the vehicle in a process from entering the parking lot to entering the parking space, a floor on which the vehicle is parked may include: determining, based on the pitch angle information of the vehicle, a quantity of inter-floor passages through which the vehicle passes, and determining a floor on which the vehicle is finally parked based on the quantity of inter-floor passages. It should be understood that the inter-floor passage refers to a passage between two adjacent floors in a building in which the parking lot of the vehicle is located.

For example, when an absolute value of a pitch angle of the vehicle is greater than or equal to an angle threshold (for example, 15 degrees or 18 degrees) and duration is longer than preset duration (for example, 30 seconds), it may be considered that the vehicle is located in the inter-floor passage. When the absolute value of the pitch angle of the vehicle is less than the foregoing angle threshold and duration is longer than preset duration (for example, 40 seconds), it is considered that the vehicle is traveling on a specific floor. When the absolute value of the pitch angle of the vehicle is greater than or equal to the angle threshold, and the pitch angle is positive, it may be considered that the vehicle is going uphill. When the absolute value of the pitch angle of the vehicle is greater than or equal to the angle threshold, and the pitch angle is negative, it may be considered that the vehicle is going downhill. Further, the quantity of inter-floor passages through which the vehicle passes is determined based on a quantity of alternating times that the absolute value of the pitch angle of the vehicle is greater than or equal to the angle threshold (in the inter-floor passage) and the absolute value of the pitch angle of the vehicle is less than the angle threshold (in an intra-floor passage) in second duration. Further, a reference floor on which an entrance of the parking lot is located may be determined based on a GNSS signal obtained before the vehicle enters the parking lot, and then the floor on which the parking space of the vehicle is located is determined with reference to the determined quantity of inter-floor passages.

In an implementation, a floor on which the parking location of the vehicle is located may be determined based on a quantity of first intersections through which the vehicle passes. The first intersection may include an intersection between an inter-floor passage and a first floor. The first floor may be a floor connected to the inter-floor passage. When the vehicle travels in the inter-floor passage, the first floor may be a floor connected to the inter-floor passage in a traveling direction of the vehicle. In other words, the first intersection may be an entrance and exit of the inter-floor passage. For example, when the vehicle travels in an inter-floor passage, an exit of the inter-floor passage in the traveling direction of the vehicle may be determined as the first intersection. For another example, when the vehicle travels on any floor, an entrance of an inter-floor passage that the vehicle enters may be determined as the first intersection. For still another example, in a process from entering the parking lot to traveling to the target parking space, the vehicle may detect in real time a plurality of intersections through which the vehicle passes during traveling, and may determine a first intersection from the plurality of intersections based on a time period in which the vehicle passes through the plurality of intersections and the pitch angle information of the vehicle.

It should be noted that, in the foregoing embodiment, an image captured by a camera (for example, a fisheye camera) may have large distortion. Therefore, after distortion correction is performed on the image, information such as a parking space number, an area number, or a floor number that is included in the image is determined based on a corrected image.

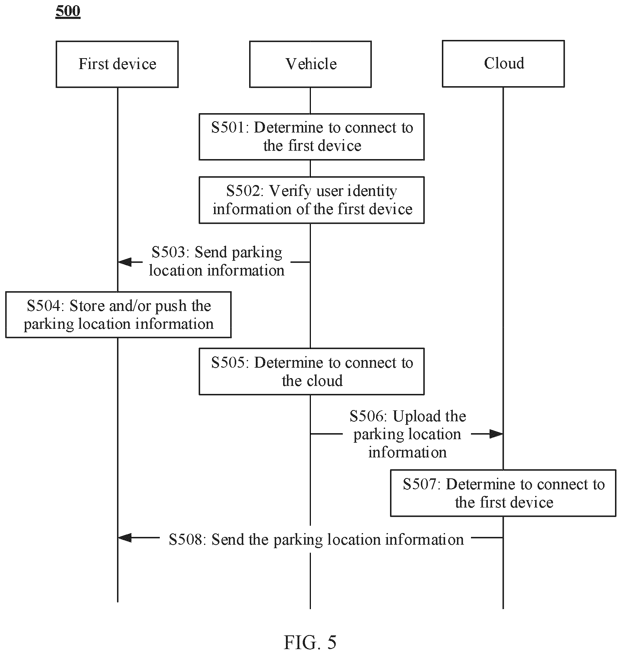

FIG. 5 shows an example process of information exchange among an electronic device, a vehicle, and a cloud in a vehicle searching method according to an embodiment of this application. Specifically, the method 500 includes the following steps.

S501: The vehicle determines to connect to a first device.

For example, the vehicle may be the vehicle 200 in the foregoing embodiment, and the first device may be the electronic device 100 in the foregoing embodiment.

In some possible implementations, a connection between the vehicle and the first device may be a Bluetooth connection, or may be a Wi-Fi connection, or may be another connection. Further, when the vehicle determines that there is a near field communication connection like the Bluetooth connection or the Wi-Fi connection to the first device, S402 is performed.

S502: The vehicle verifies user identity information of the first device.

For example, after verification of the vehicle on the user identity information of the first device succeeds, S503 is performed; or when verification of the vehicle on the user identity information of the first device fails, S503 is not performed.

It should be understood that the user identity information may include account information of an authorized user of the vehicle, or may include other information that can prove an identity of an authorized user of the vehicle.

In some possible implementations, the vehicle may verify the user identity information of the first device by determining whether a vehicle owner app login account of the first device is consistent with an in-vehicle infotainment login account. Alternatively, the vehicle may verify the user identity information of the first device by determining whether a login account of the first device is consistent with an in-vehicle infotainment login account. Alternatively, the vehicle may verify the user identity information of the first device by determining whether SIM card information of the first device is consistent with an in-vehicle infotainment login account.

S503: The vehicle sends parking location information to the first device.

For example, the vehicle may send the parking location information to the first device by using a near field communication technology like Wi-Fi, BT, or NFC.

S504: The first device stores and/or pushes the parking location information.

In some possible implementations, the first device may store the parking location information in the first device. When a user searches for the vehicle by using the first device, the first device displays a parking location of the vehicle to the user based on the parking location information; and/or the first device may push a parking location of the vehicle to the user by using a leftmost screen or a swipe-down notification bar interface of the first device.

S505: The vehicle determines to connect to the cloud.

For example, the cloud may be the cloud 300 in the foregoing embodiment.

S506: The vehicle uploads the parking location information to the cloud.

S507: The cloud determines to connect to the first device.

S508: The cloud sends the parking location information to the first device.

It should be understood that the steps or operations of the vehicle searching method shown in FIG. 5 are merely examples. Other operations or variations of the operations in FIG. 5 may alternatively be performed in this embodiment of this application. In addition, the steps in FIG. 5 may be performed based on a sequence different from a sequence presented in FIG. 5, and not all operations in FIG. 5 need to be performed. For example, when the vehicle determines that no first device is connected, S502 to S504 may not be performed. Alternatively, S501 and S505 may be performed simultaneously. In some possible implementations, S504 may be performed after S508.

In some possible implementations, the vehicle may perform S501 to S503, S505, and S506 through a vehicle-mounted terminal like a telematics box (telematics box, T-Box) or an in-vehicle infotainment.

In the foregoing technical solution, the vehicle transmits the parking location information to the electronic device by using the near field communication technology. This can overcome a problem that the electronic device like a mobile phone cannot obtain the parking location information of the vehicle when there is no signal or signal strength is poor in an underground parking lot. When the electronic device is not connected to the vehicle, the vehicle may alternatively upload the parking location information to the cloud, so that the user subsequently obtains the parking location information from the cloud through the electronic device to determine the parking location of the vehicle.

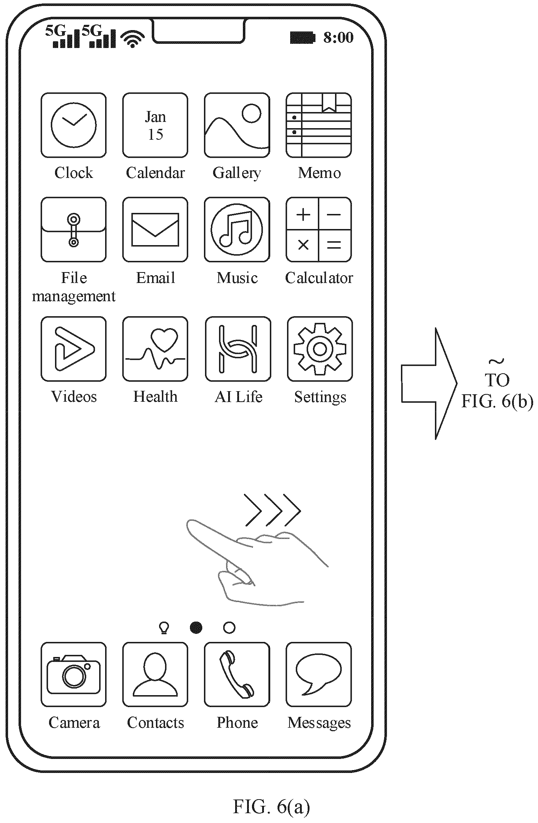

A specific method for the user to view the parking location of the vehicle by using the electronic device may be shown in FIG. 6(a) to FIG. 12.

FIG. 6(a) to FIG. 6(c) show a group of graphical user interfaces (graphical user interfaces, GUIs) according to an embodiment of this application.

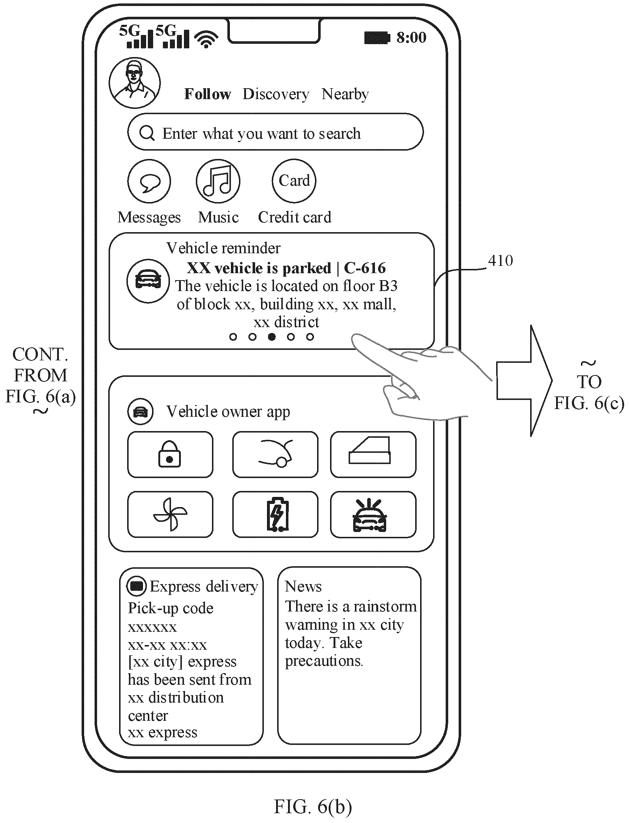

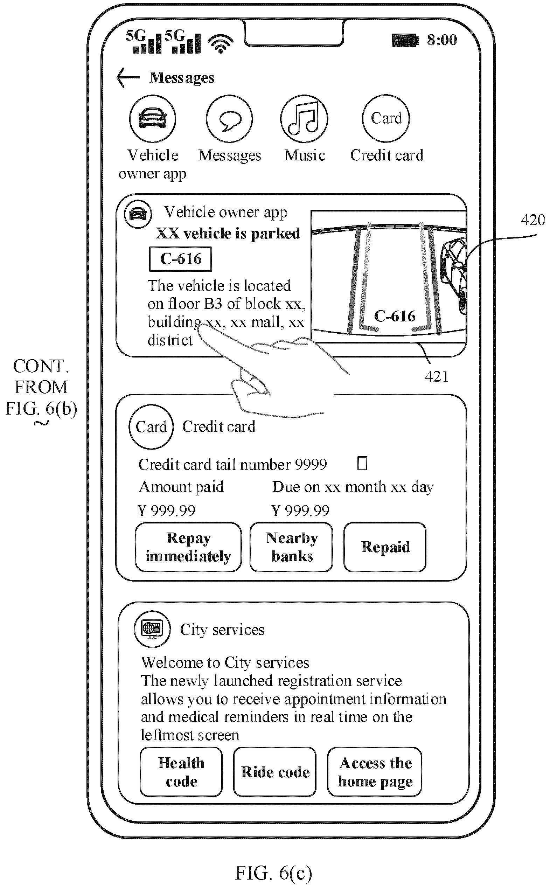

When searching for the vehicle by using the electronic device, the user may swipe left on a home screen page of the electronic device shown in FIG. 6(a), and the electronic device displays a leftmost screen shown in FIG. 6(b) in response to a swipe-left operation of the user. The electronic device may display a service account 410 on a leftmost screen interface, where the service account 410 displays a geographical parking location of the vehicle, for example, "The vehicle is located on floor B3 of block xx, building xx, xx mall, xx district"; and a parking space number of a parking location of the vehicle, for example, "C-616", where "C" represents an area in which the parking space is located, and "616" represents a specific number of the parking space. Alternatively, the service account 410 may display a type or name of the parked vehicle, for example, "XX vehicle is parked". Further, in response to an operation of tapping the service account 410 by the user, the electronic device may display, by using a service card 420 shown in FIG. 6(c), the geographical parking location of the vehicle, the parking space number of the parking space of the vehicle, and a parking space image 421 including the parking space number. In this way, the user can more intuitively learn about related information of the parking space number of the parking location of the vehicle.

In some possible implementations, when detecting an operation of the user of viewing information on the leftmost screen, the electronic device queries a vehicle owner app for whether current parking location information is stored, and if the current parking location information is stored, the electronic device determines the parking location of the vehicle based on the parking location information, and displays the parking location on the leftmost screen, for example, one or more of the geographical parking location of the vehicle, the parking space number of the parking location of the vehicle, and a parking space image.

It should be understood that the parking space image 421 may include the parking space in which the vehicle is located.

It should be understood that, in embodiments of this application, the leftmost screen is an interface displayed after the user detects, on a desktop of the mobile phone (for example, the desktop of the mobile phone shown in FIG. 6(a)), an operation of swiping right by the user. The desktop of the mobile phone shown in FIG. 6(a) may be a second desktop page on the desktop of the mobile phone, and the leftmost screen may be a first desktop page on the desktop of the mobile phone, as shown in FIG. 6(b). The leftmost screen can provide the user with services such as search, application suggestions, quick services, missed call notification cards, and SmartCare. The leftmost screen may display some apps frequently used by the user.

For example, for a mobile phone running an Android operating system, a desktop of the mobile phone may also include a plurality of desktop pages, where a first desktop page may be a home screen page of the mobile phone. If a current desktop page is a third desktop page, the mobile phone may display the home screen page after detecting, at the bottom of the screen, an operation of swiping up by the user. Alternatively, if a screen of the mobile phone is currently displaying an application, after detecting, at the bottom of the screen, an operation of swiping up by the user, the mobile phone may display a desktop page (for example, a second desktop page) including an icon of the application, and after detecting again, at the bottom of the screen, an operation of swiping up by the user, the mobile phone may display the home screen page. When the screen of the mobile phone displays the home screen page, the mobile phone may display the leftmost screen interface after detecting an operation of swiping right by the user.

For example, for a mobile phone running an iOS operating system, a desktop of the mobile phone may also include a plurality of desktop pages, where a first desktop page may also be a home screen page of the mobile phone. If a current desktop page is a third desktop page, the mobile phone may display the home screen page when detecting an operation of pressing a home button by the user. Alternatively, if a screen of the mobile phone is currently displaying an application, after detecting an operation of pressing a home button by the user, the mobile phone may display a desktop page (for example, a second desktop page) including an icon of the application, and after detecting again, an operation of pressing the home button by the user, the mobile phone may display the home screen page. When the screen of the mobile phone displays the home screen page, the mobile phone may display the leftmost screen interface after detecting an operation of swiping right by the user.

It should be understood that the home screen page may be set before delivery, or may be set by the user based on a preference of the user. This is not limited in embodiments of this application.

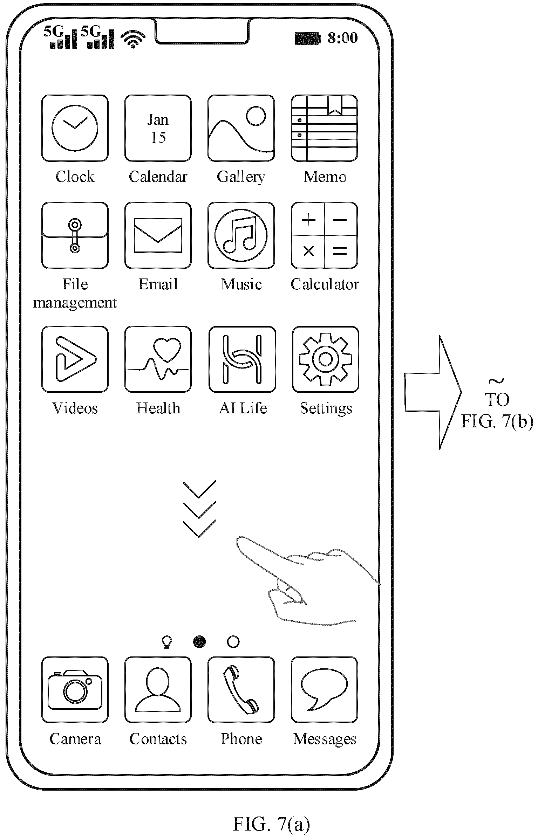

FIG. 7(a) to FIG. 7(c) show another group of GUIs according to an embodiment of this application.

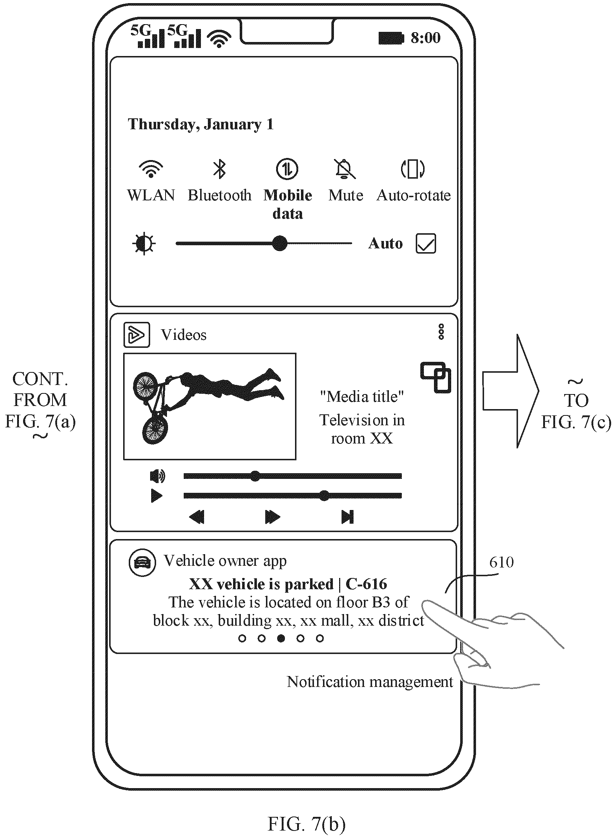

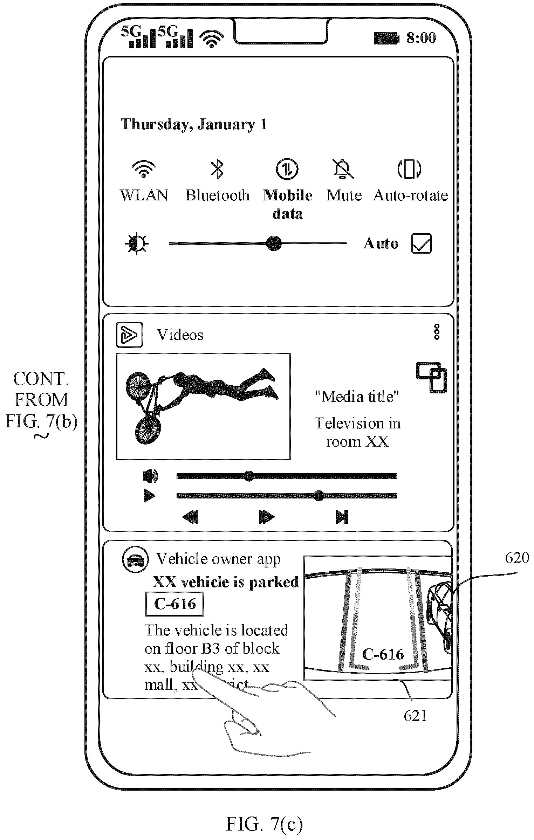

When searching for the vehicle by using the electronic device, the user may swipe down on a home screen page of the electronic device shown in FIG. 7(a), and the electronic device displays a swipe-down notification bar interface shown in FIG. 7(b) in response to a swipe-sown operation of the user. The electronic device may display a notification card 610 on the swipe-down notification bar interface, where the notification card 610 displays a geographical parking location of the vehicle, for example, "The vehicle is located on floor B3 of block xx, building xx, xx mall, xx district"; and a parking space number of a parking location of the vehicle, for example, "C-616". Alternatively, the notification card 610 may display a type or name of the parked vehicle, for example, "XX vehicle is parked". Further, in response to an operation of tapping the notification card 610 by the user, the electronic device may display, by using a service card 620 shown in FIG. 7(c), the geographical parking location of the vehicle, the parking space number of the parking space of the vehicle, and a parking space image 621 including the parking space number. In this way, the user can more intuitively learn about related information of the parking space number of the parking location of the vehicle.

It should be understood that the parking space image 621 may include the parking space in which the vehicle is located.

It should be understood that, in embodiments of this application, the swipe-down notification bar interface includes shortcut entries for a plurality of functions, such as airplane mode, Wi-Fi, a flashlight, a do-not-disturb function, a file sharing function, and a function used to adjust screen brightness. The user may adjust a sequence of functions on the swipe-down notification bar interface, or may increase or decrease content on the swipe-down notification bar interface. The swipe-down notification bar interface may further include some notification cards for reminding the user, for example, an unread SMS message of the user, or a location in which a call recording of the user is just saved.

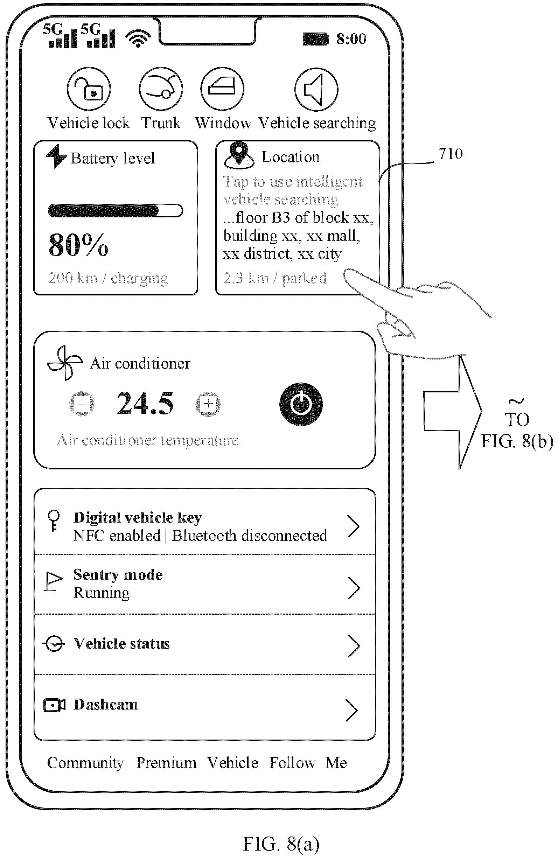

In some possible implementations, the user may tap the service card 420 or the service card 620 to enter a home screen page of the vehicle owner app. In response to an operation of tapping the service card 420 or the service card 620 by the user, or in response to an operation of tapping an icon of a vehicle app by the user, the electronic device displays a home screen page of the vehicle owner app shown in FIG. 8(a). The home screen page of the vehicle owner app may include a location information box 710. The location information box 710 may include an address of a parking location of the vehicle, for example, "...floor B3 of block xx, building xx, xx mall, xx district, xx city"; information about a distance between the vehicle and the electronic device, for example, "2.3 km"; current status information of the vehicle, for example, "Parked"; and prompt information "Tap to use intelligent vehicle searching".

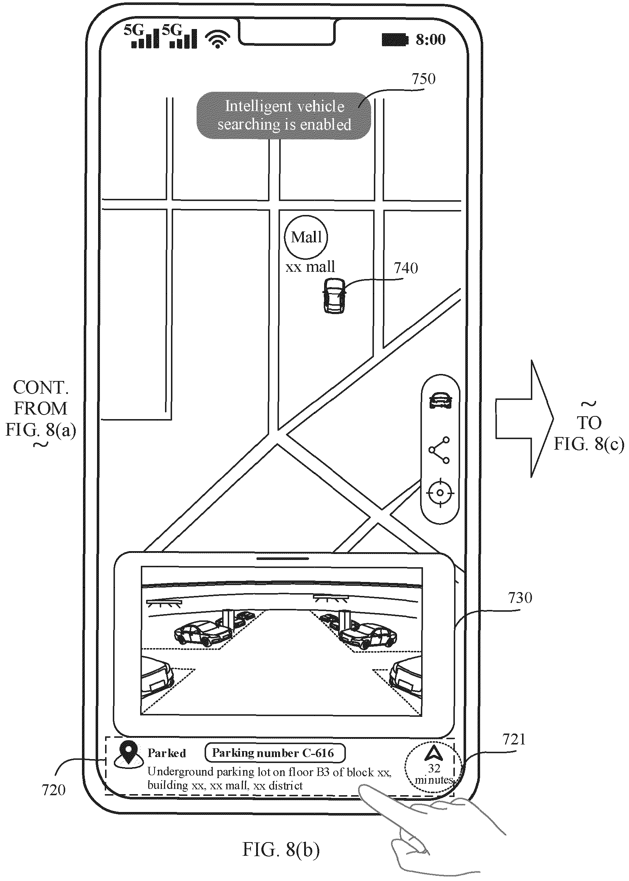

Further, after the user taps the location information box 710, the electronic device displays, in response to the tap operation of the user, an intelligent vehicle searching interface shown in FIG. 8(b). The intelligent vehicle searching interface may display a navigation information box 720. The navigation information box 720 includes information 721 about time required by the electronic device to navigate to a location of the vehicle. The intelligent vehicle searching interface may further display a vehicle parking location image frame 730, a map including a geographical parking location of the vehicle, and a location 740 of the vehicle on the map. In some possible implementations, in response to an operation of tapping the location information box 710 by the user, when displaying the intelligent vehicle searching interface, the electronic device may further display a vehicle searching animation of "Intelligent vehicle searching is enabled" shown in 750 in FIG. 8(b).

In some possible implementations, the vehicle parking location image frame 730 may include at least one of an image 731 of a parking lot shot by the vehicle at the parking location, a vehicle surround-view image 732, and an image 521 (or 621) of a parking space in which the vehicle is parked. The image 731 of the parking lot, the vehicle surround-view image 732, and the parking space image 521 (or 621) may be images directly shot by the vehicle, or may be obtained by splicing a plurality of images shot by the vehicle. The image 521 (or 621) of the parking space in which the vehicle is parked may be a parking space image directly shot by the vehicle, or may be an image obtained after distortion correction is performed on a parking space image directly shot by the vehicle. Further, the electronic device may switch an image displayed in the vehicle parking location image frame 730 in response to a swipe-left or swipe-right operation of the user in the vehicle parking location image frame 730.

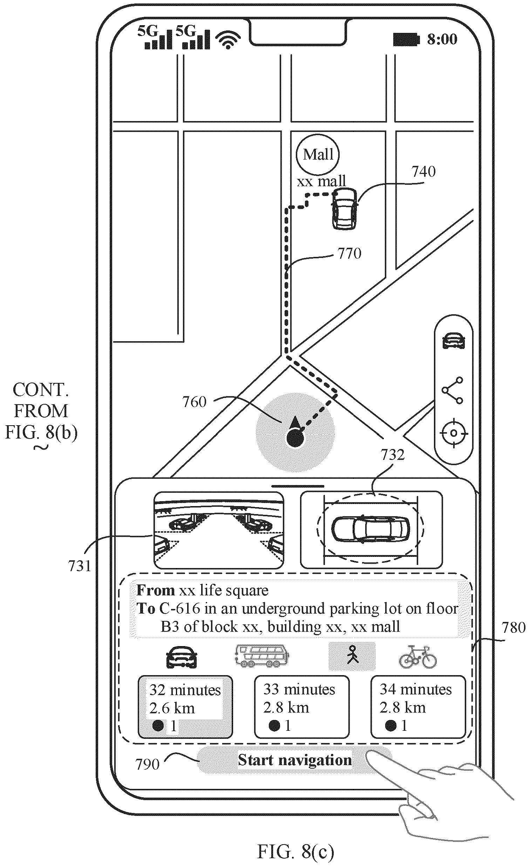

Further, the user may tap the navigation information box 720, and the electronic device displays, in response to the tap operation of the user, a path planning interface shown in FIG. 8(c). The path planning interface may display a location 740 of the vehicle, a location 760 of the electronic device, a planned path track 770 from the electronic device to the vehicle, and a navigation path selection box 780. For example, the navigation path selection box 780 may display information about a plurality of navigation modes, paths, time required to reach a destination, and a quantity of traffic lights. In some possible implementations, the path track includes a track from a parking lot entrance to a parking space of the vehicle. In some possible implementations, the electronic device may enter a real-time navigation mode in response to the user tapping a control "Start navigation" 790.

In some possible implementations, when detecting an operation of tapping an icon of the vehicle owner app by the user, the electronic device queries whether the vehicle owner app caches the parking location information, and when the vehicle owner app caches the parking location information, the parking location of the vehicle is displayed on an interface of the vehicle owner app. Alternatively, when detecting an operation of tapping an icon of the vehicle owner app by the user, the electronic device queries whether a cloud caches the parking location information, and when the cloud caches the parking location information, the parking location of the vehicle is displayed on an interface of the vehicle owner app. In some possible implementations, when the cloud caches a plurality of pieces of parking location information, or both the vehicle owner app and the cloud cache the parking location information, the parking location of the vehicle that is determined based on parking location information cached at a moment closest to a current moment is displayed on the interface of the vehicle owner app.

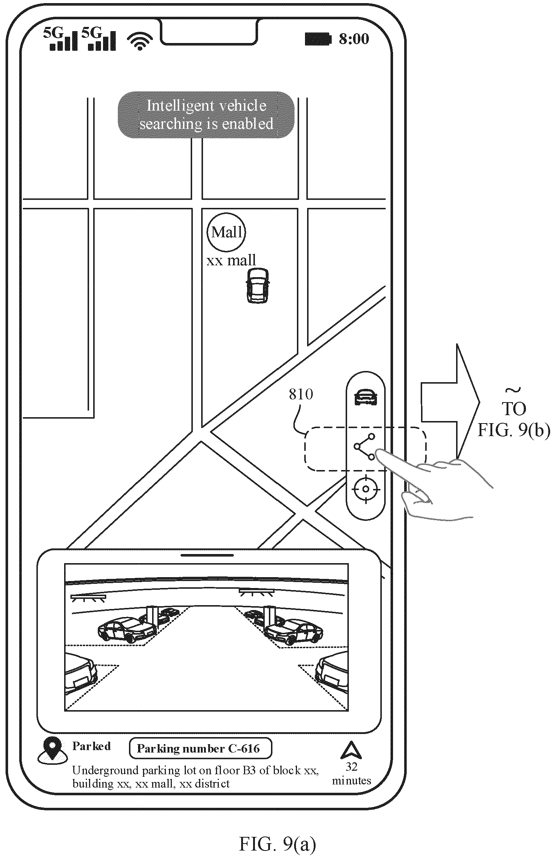

FIG. 9(a) to FIG. 9(c) show another group of GUIs according to an embodiment of this application.

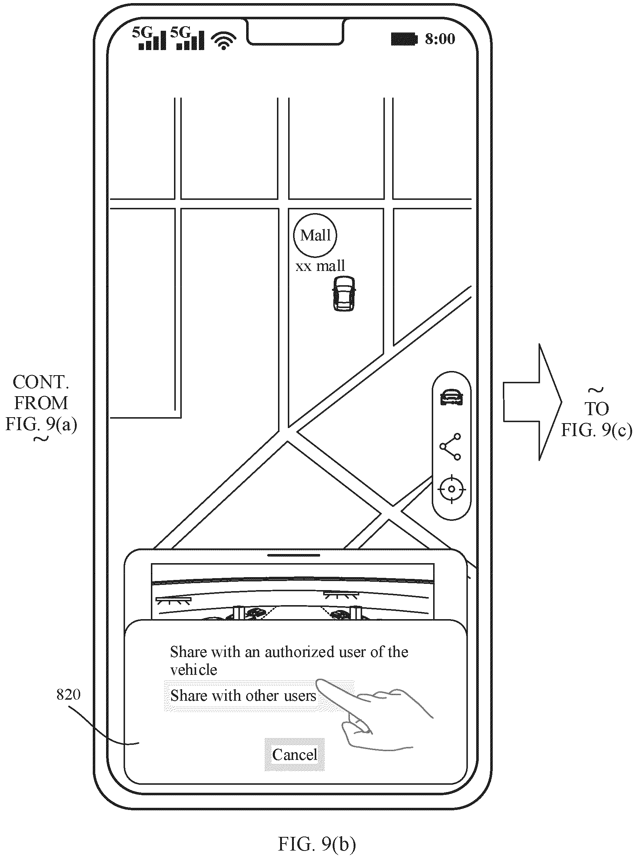

In some possible implementations, the user may want to share a parking location of the vehicle with another person. For example, when the user wants to give the vehicle to another authorized user of the vehicle for use, the user may tap a share control 810 in a side function box shown in FIG. 9(a) to share the parking location of the vehicle. In response to an operation of tapping the share control 810 by the user, the electronic device displays the interface shown in FIG. 9(b). The interface includes a prompt box 820, used to prompt the user to share with an "authorized user of the vehicle" or share with "other users".

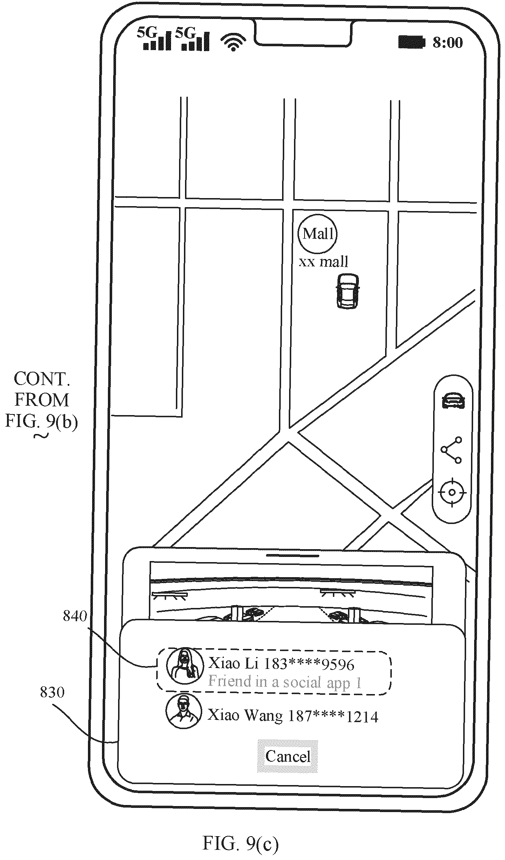

For example, if the user taps a "Share with other users" control, the electronic device displays, in response to the tap operation of the user, an interface shown in FIG. 9(c). The interface includes a prompt box 830, and the prompt box 830 includes information about the other users. The user may tap any other user to share the parking location of the vehicle. For example, the prompt box 830 may further remind whether the other users each are a friend in a social app 1 to which the electronic device currently logs in, as shown in 840. In some possible implementations, the user may alternatively tap a "Cancel" control in the prompt box 820 or the prompt box 830 to cancel parking location sharing.

In some possible implementations, in the prompt box 820 shown in FIG. 9(b), parking information of the vehicle shared by the electronic device when the user taps the "authorized user of the vehicle" is different from parking information shared by the electronic device when the user taps the "other users". For example, in response to an operation of tapping the "authorized user of the vehicle" control by the user, the electronic device shares all parking information of the vehicle, including a geographical parking location of the vehicle, a parking space number of a parking space in which the vehicle is parked, an image of a parking lot shot at a parking location of the vehicle, a vehicle surround-view image, and an image of the parking space in which the vehicle is parked; and in response to an operation of tapping the "other users" control by the user, the electronic device shares a part of parking information of the vehicle, for example, the geographical parking location of the vehicle.

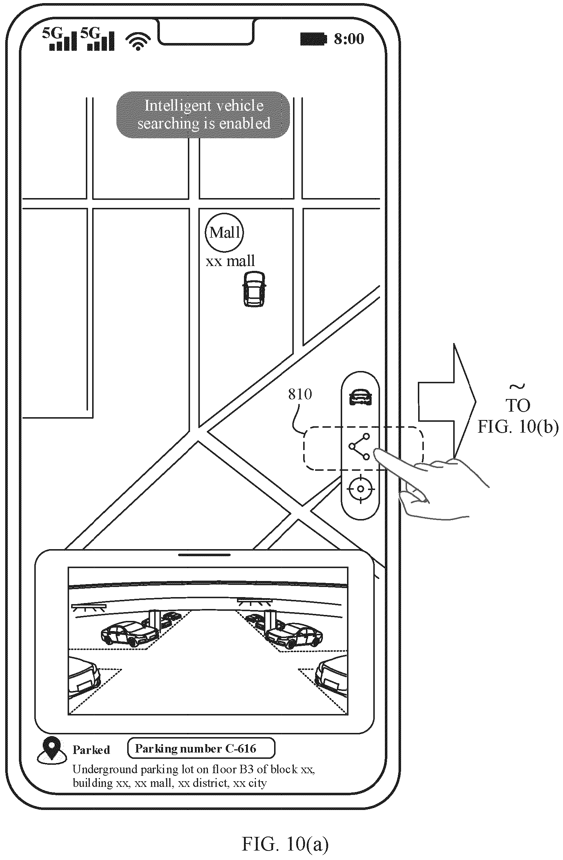

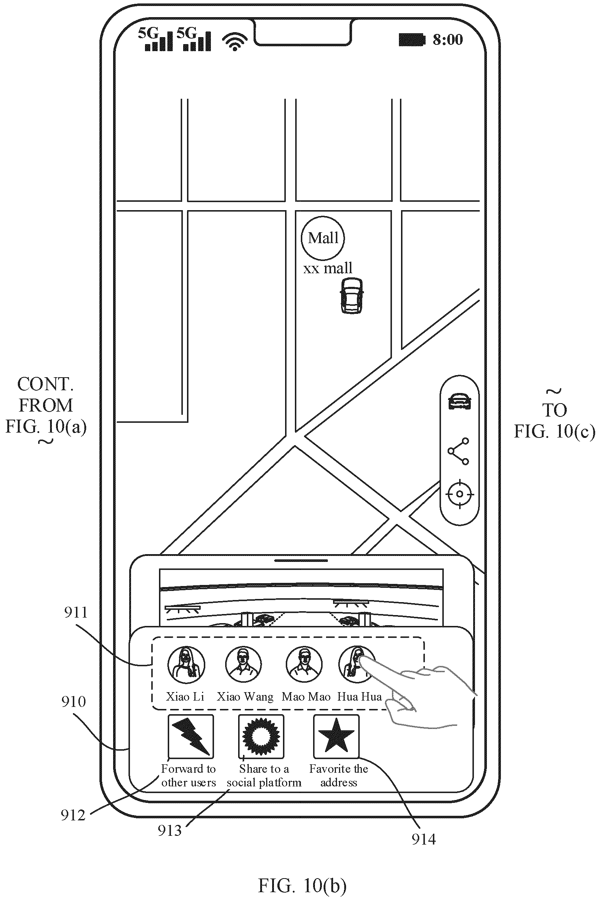

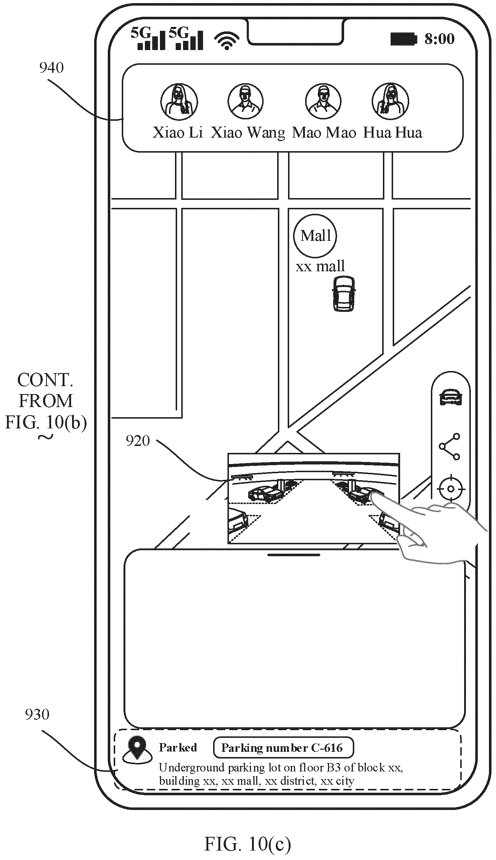

In some possible implementations, when the user wants to share the parking location of the vehicle with another person, when the user taps the share control 810 in the side function box shown in FIG. 10(a), the vehicle owner app may pop up a message sharing pop-up window 910 shown in FIG. 10(b). The message sharing pop-up window 910 includes an avatar 911 of a user with which a message is recently shared, and when the user taps the avatar 911, the user may quickly share with the user. For example, when the user taps an avatar of "Hua Hua", the electronic device shares the parking location of the vehicle with "Hua Hua" in response to the tap operation of the user. In addition, the message sharing pop-up window 910 may further include a "Forward to other users" control 912, a "Share to a social platform" control 913, and a "Favorite the address" control 914.

In some possible implementations, the user may alternatively drag information on the interface of the vehicle owner app to share. For example, the user may drag an image 920 or parking location information 930 of the vehicle to share. When the electronic device detects that the user drags the image 920 or the parking location information 930 of the vehicle, a recent message sharing pop-up window 940 pops up on the top of the interface. The message sharing pop-up window 940 includes avatars of users with which a message is recently shared. The user may drag a to-be-shared message to any avatar. It should be noted that the avatars of the users included in the message sharing pop-up windows 910 and 940 may be avatars of recently shared users, or may be avatars of frequently contacted users, or may be avatars of set quick sharing users. This is not specifically limited in embodiments of this application.

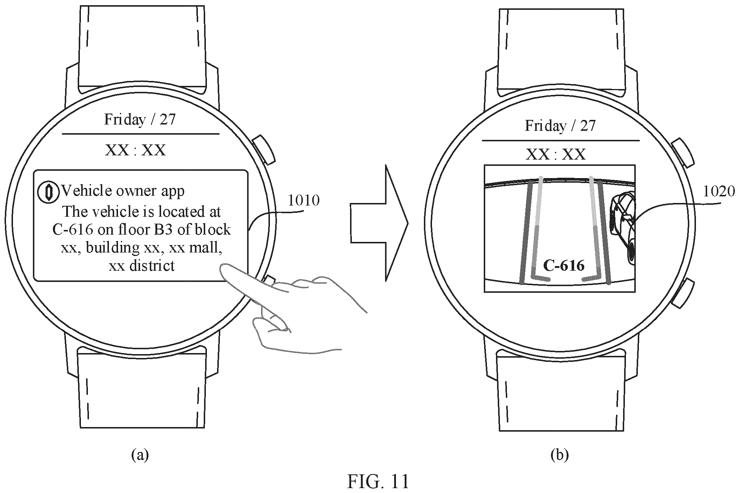

FIG. 11 shows another group of GUIs according to an embodiment of this application.

In some possible implementations, the electronic device is a wearable device, for example, a watch shown in the figure. For example, after receiving the parking location information of the vehicle, the watch displays a message prompt box 1010 shown in (a) in FIG. 11. The message prompt box 1010 displays location information of the vehicle: "The vehicle is located at C-616, floor B3 of block xx, building xx, xx mall, xx district". In some possible implementations, after the watch displays the message prompt box 1010 shown in (a) in FIG. 11 for specific duration, the message prompt box 1010 is hidden. When the user rotates a side knob of the watch or presses a side button of the watch, or the user swipes down on a screen of the watch, the watch displays the message prompt box 1010 again in response to the operation of the user. For example, the specific duration may be 5 seconds, 7 seconds, or other duration.

In some possible implementations, after receiving the parking location information of the vehicle, the watch temporarily stores the parking location information, and when detecting that the user rotates or presses the side knob of the watch or the user swipes down on the screen of the watch, in response to the operation of the user, displays the message prompt box 1010. In some possible implementations, when the user taps the message prompt box 1010, the watch displays, in response to the tap operation of the user, an image 1020 of a parking space in which the vehicle is parked shown in FIG. 9(b). In some possible implementations, in response to an operation like rotating or pressing the side knob of the watch by the user, the watch may alternatively display the image 1020 of the parking space in which the vehicle is parked. This is not specifically limited in embodiments of this application.

In some possible implementations, the watch may receive the parking location information from the vehicle, or may obtain the parking location information from the cloud, or may receive the parking location information from another electronic device associated with the vehicle, for example, receive the parking location information from a mobile phone side associated with the vehicle of the user. The "electronic device associated with the vehicle" may be understood as that identity information of an authorized user of the vehicle is entered into the electronic device, or login accounts of the vehicle and the electronic device are accounts of a same user.

It should be noted that the parking space number-related information in a form of "area-parking space number" displayed in FIG. 5 to FIG. 11 is merely an example for description. During specific implementation, the parking space number-related information may alternatively be in another form, for example, "C: 616", or "C/ 616". In some possible implementations, when the parking lot in which the vehicle is parked has only one floor, the displayed parking space number may alternatively include only the "parking space number", for example, "616". In some possible implementations, the parking space number information may further include a vehicle parking area number and/or a floor number. Further, the electronic device displays the parking space number in a form of "floor-area number-parking space number", or the electronic device displays the parking space number in a form of "area number-parking space number".

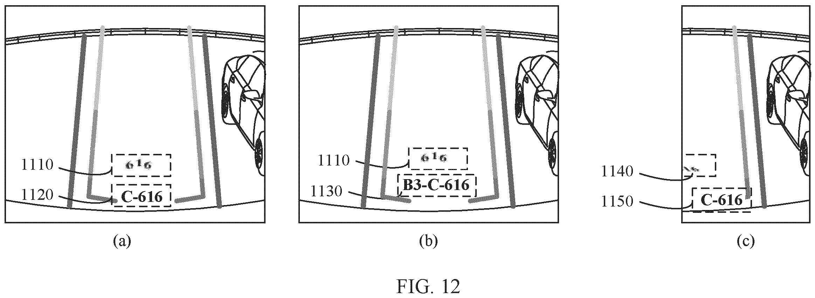

The parking space number in the parking space image shown in FIG. 5 to FIG. 11 may be a parking space number of the parking space, for example, sprayed on the parking space in a manner like spraying; or may be determined by processing one or more images obtained by the vehicle, and then displayed on the parking space image in an art font. For example, in the image shown in (a) in FIG. 12, a parking space number of a parking space is shown in a frame 1110. After an area in which the parking space is located is determined by processing one or more images obtained by the vehicle, an "area-parking space number" may be displayed in an art font, as shown in a frame 1120. Alternatively, after an area in which the parking space is located and a floor on which the parking space is located are determined by processing one or more images obtained by the vehicle, a "floor-area-parking space number" may be displayed in an art font, as shown in a frame 1130 in (b) in FIG. 12. In some possible implementations, a parking space number displayed in a parking space image may be incomplete and distorted greatly. As shown in a frame 1140 in (c) in FIG. 12, a parking space number shown in a frame 1150 may be displayed in an art font.

It should be further noted that, in the foregoing embodiments, an example in which the electronic device displays a notification card or a service card in response to a swipe operation of the user, and further pushes the parking location of the vehicle by using the notification card or the service card is used for description. Alternatively, an example in which the electronic device displays the vehicle owner app in response to a tap operation of the user, and further pushes the parking location of the vehicle by using the vehicle owner app is used for description. During specific implementation, the electronic device may alternatively prompt the user of the parking location of the vehicle in another manner. For example, the electronic device may display or broadcast the parking location of the vehicle in response to a voice instruction of the user. The voice instruction may be "Intelligent assistant, where is the vehicle currently", or may be another instruction. This is not specifically limited in embodiments of this application. For another example, the electronic device may display or broadcast the parking location of the vehicle in response to a preset gesture of the user.

In some possible implementations, the method provided in embodiments of this application may alternatively be performed by a virtual reality (virtual reality, VR) device. In some possible implementations, the VR device is associated with the electronic device 100 and/or the vehicle 200 and/or the cloud 300 in the foregoing embodiments, and the user may view parking location information of the vehicle 200 by using a display of the VR device. The parking location information may be received from the vehicle 200 and/or the cloud 300, or may be received from an electronic device associated with the vehicle 200. This is not specifically limited in embodiments of this application.

For example, the parking location of the vehicle, for example, "...floor B3 of block xx, building xx, xx mall, xx district, xx city"; information about a distance between the vehicle 200 and the VR device, for example, "2.3 km"; and current status information of the vehicle 200, for example, "Parked", may be displayed in a pop-up window by using the display of the VR device. After the user taps the pop-up window by using VR light, the display of the VR device may further display an image of a parking location of the vehicle in response to an operation of tapping the pop-up window.

In some possible implementations, the icon of the vehicle owner app may be displayed by using the display of the VR device. When the user controls the VR light to tap the icon of the vehicle owner app, the display of the VR device may display the parking location of the vehicle on the interface of the vehicle owner app in response to an operation of tapping the icon of the vehicle owner app. The display of the VR device may further display, on the interface of the vehicle owner app, at least one of an image of a parking lot shot by the vehicle at the parking location, a vehicle surround-view image, and an image of a parking space in which the vehicle is parked. The display of the VR device may switch, in response to control of the VR light, an image displayed on the interface of the vehicle owner app. In some possible implementations, the VR device may further generate, based on an image included in the parking location information, a VR scenario of a place in which the vehicle is parked. The user may view, by using a VR display, the scenario of the place in which the vehicle is parked, so that the user can more intuitively obtain the parking location of the vehicle. This helps improve user experience.

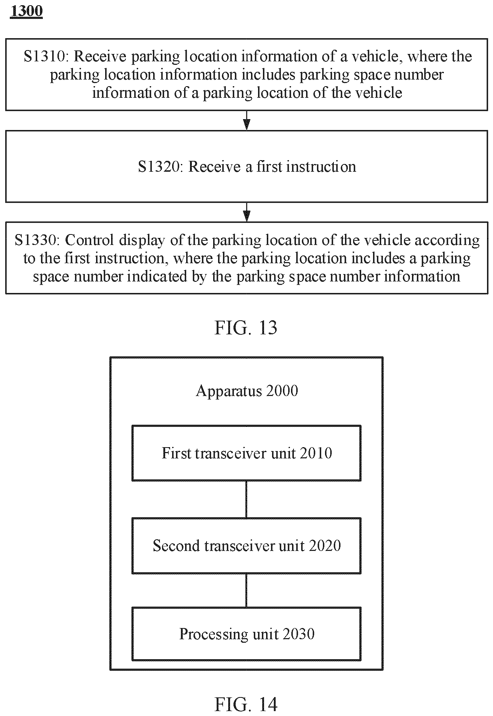

FIG. 13 is a schematic flowchart of a vehicle searching method 1300 according to an embodiment of this application. The method 1300 may be performed by the electronic device 100 shown in FIG. 1. The method 1300 includes the following steps:
S1310: Receive parking location information of a vehicle, where the parking location information includes parking space number information of a parking location of the vehicle.

For example, the vehicle may be the vehicle 200 in the foregoing embodiment, or may be another vehicle. The parking location information may be determined by the vehicle. For a specific method for determining the parking location information by the vehicle, refer to the description in the foregoing embodiment. Details are not described herein again.

It should be noted that the parking space number information may include a parking space number of a parking space of the vehicle, or may include at least one of an area in which the parking space of the vehicle is located or a floor on which the parking space of the vehicle is located.

S1320: Receive a first instruction.

For example, the first instruction may include but is not limited to a voice instruction of a user for searching for the vehicle, an instruction generated by the user for an input on a screen of the electronic device, and an instruction generated by the user for an operation on a physical button of the electronic device.

For example, the "voice instruction of the user for searching for the vehicle" may include "Intelligent assistant, where is the vehicle currently" in the foregoing embodiment; the "input of the user for the screen of the electronic device" may include: swiping right, swiping down, and tapping on the electronic screen by the user in the foregoing embodiment; and the "operation of the user on the physical button of the electronic device" may include: pressing the side button of the watch by the user, and rotating the side knob of the watch by the user in the foregoing embodiment. It should be understood that the first instruction may alternatively be another instruction that can trigger the electronic device to display the parking location of the vehicle.

For example, when the electronic device currently shows the home screen page shown in FIG. 6(a) (or FIG. 7(a)), and a touch sensor (for example, the touch sensor 180K shown in FIG. 1) detects a swipe-right signal on the screen of the electronic device, the electronic device generates, based on the swipe-right signal, an instruction for controlling the electronic device to switch from the home screen page to the leftmost screen interface shown in FIG. 6(b).

For another example, when the electronic device currently shows the home screen page shown in FIG. 6(a) (or FIG. 7(a)), and a touch sensor detects a swipe-down signal on the screen of the electronic device, the electronic device generates, based on the swipe-down signal, an instruction for controlling the electronic device to switch from the home screen page to the swipe-down notification bar interface shown in FIG. 7(b).

For another example, when a touch sensor detects a tap signal of an icon of a vehicle owner app on the screen of the electronic device, the electronic device generates, based on the tap signal, an instruction for controlling the electronic device to display a display interface of the vehicle owner app shown in FIG. 8(a).

For another example, when a pressure sensor (for example, the pressure sensor 180A) at a physical button detects a press signal of the button, the electronic device generates, based on the press signal, an instruction for controlling the electronic device to display the interface shown in (a) in FIG. 11.

For another example, when a torque sensor at a physical button detects a torque change signal of the button, the electronic device generates, based on the torque change signal, an instruction for controlling the electronic device to display the interface shown in (a) in FIG. 11.

For another example, when the electronic device receives a voice instruction, the electronic device generates, according to the voice instruction, an instruction for controlling the electronic device to display the parking location of the vehicle.

S1330: Control display of the parking location of the vehicle according to the first instruction, where the parking location includes the parking space number indicated by the parking space number information.

For example, in response to the first instruction, the electronic device controls the electronic device to display the parking location of the vehicle on the leftmost screen interface shown in FIG. 6(b); or in response to the first instruction, the electronic device controls the electronic device to display the parking location of the vehicle on the swipe-down notification bar interface shown in FIG. 7(b); or in response to the first instruction, the electronic device controls the electronic device to display the parking location of the vehicle on the interface shown in (a) in FIG. 11; or in response to the first instruction, the electronic device controls the electronic device to display the parking location of the vehicle by using a pop-up window.

In some possible implementations, the parking location of the vehicle includes a geographical parking location of the vehicle, and the parking location of the vehicle further includes at least one of an image of an environment around the parking location of the vehicle, area information of the parking space of the vehicle, and information about a floor on which the parking space of the vehicle is located.

In some possible implementations, the method further includes: receiving a second instruction, and controlling, according to the second instruction, display of a first image of the parking space in which the vehicle is located, where the first image includes the parking space number.

In some possible implementations, the second instruction and the first instruction may be a same instruction, namely, an instruction that is generated based on the tap signal detected by the touch sensor and that controls the electronic device to display the display interface of the vehicle owner app.

In some possible implementations, the second instruction and the first instruction may be different instructions. For example, if the first instruction is an instruction generated based on a signal (for example, a swipe-right signal or a swipe-down signal) detected by the touch sensor, the second instruction may be an instruction generated based on a tap signal detected by the touch sensor in a first area of the screen of the electronic device, where the first area may be an area on the leftmost screen interface or the swipe-down notification bar interface, and the first area is used to display the parking location of the vehicle in a text form. For example, the second instruction may be an instruction generated based on the user tapping an area 410 shown in FIG. 6(b); or may be an instruction generated based on the user tapping an area 610 shown in FIG. 7(b); or may be an instruction generated based on the user tapping an area 1010 shown in (a) in FIG. 11.

In some possible implementations, the method further includes: receiving a third instruction; and the controlling display of the parking location of the vehicle according to the first instruction includes: controlling, according to the first instruction, a display interface of a first application to display the parking location, where the parking location includes a second image indicating environmental information around the parking location; and switching, according to the third instruction, the second image displayed on the display interface of the first application.

For example, the third instruction may be an instruction generated based on a swipe-left or swipe-right signal detected by a touchscreen sensor in a second area, where the second area is an area on the display interface of the first application. For example, the second area may be the vehicle parking location image frame 730 shown in FIG. 8(b), and the third instruction may be an instruction generated based on a swipe-left or swipe-right action of the user on the vehicle parking location image frame 730 shown in FIG. 8(b).

In some possible implementations, the method further includes: after the controlling, according to the first instruction, a display interface of a first application to display the parking location, receiving a fourth instruction, and controlling, according to the fourth instruction, the display interface of the first application to display information about a track between a first position and the vehicle.

For example, the fourth instruction may be an instruction generated based on a tap signal that is for a second control and that is detected by the touchscreen sensor. The second control includes a control that controls generation of the information about the track, or the second control includes a control for enabling navigation.

For example, the second control may be the navigation information box 720 shown in FIG. 8(b), and the fourth instruction may be an instruction generated based on the user tapping the navigation information box 720 shown in FIG. 8(b).

In some possible implementations, the display interface of the first application includes a first control, and the method further includes: receiving a fifth instruction for the first control, where the first control is associated with a second application; and controlling, according to the fifth instruction, a display interface of the second application to display the information about the track between the first position and the vehicle.

For example, the fifth instruction may be an instruction generated based on a tap signal that is for the first control and that is detected by the touchscreen sensor. The first control may include a control for enabling navigation, or the first control may include an icon of the second application.

For example, the first control may be the navigation information box 720 shown in FIG. 8(b), and the fifth instruction may be an instruction generated based on the user tapping the navigation information box 720 shown in FIG. 8(b).

In some possible implementations, the method further includes: after the controlling display of the parking location of the vehicle according to the first instruction, receiving a sixth instruction, and sending shared information to a first object according to the sixth instruction, where when the first object is an authorized user of the vehicle, the shared information includes the parking location; or when the first object is an unauthorized user of the vehicle, the shared information includes a part of information of the parking location.

For example, the sixth instruction may be an instruction generated based on a tap signal that is for a third control and that is detected by the touchscreen sensor. The third control includes a control for controlling information sharing.

For example, the third control may be the share control 810 shown in FIG. 9(a), and the sixth instruction may be an instruction generated based on the user tapping the share control 810 shown in FIG. 9(a).

According to the vehicle searching method provided in this embodiment of this application, the parking location of the vehicle can be directly provided for the user in response to an instruction or an operation of the user. This reduces interaction steps between the user and the electronic device in a vehicle searching process, and improves vehicle searching efficiency. In addition, in the vehicle searching method provided in this embodiment of this application, the user does not need to determine the vehicle location based on an image displayed by the electronic device. This can improve vehicle searching accuracy of the user, and help improve user experience.

In various embodiments of this application, unless otherwise stated or there is a logic conflict, terms and/or descriptions in embodiments are consistent and may be mutually referenced, and technical features in different embodiments may be combined based on an intemal logical relationship thereof, to form a new embodiment.

An embodiment of this application further provides an apparatus for implementing any one of the foregoing methods. For example, an apparatus is provided, including units (or means) configured to implement steps performed by an electronic device or a system that includes a kernel layer, a system library, an application framework layer, and an application layer in any one of the foregoing methods.

FIG. 14 is a schematic block diagram of a vehicle searching apparatus 2000 according to an embodiment of this application. The apparatus 2000 may be disposed in the electronic device in the foregoing embodiments. The apparatus 2000 includes: a first transceiver unit 2010, configured to receive parking location information of a vehicle, where the parking location information includes parking space number information of a parking location of the vehicle; a second transceiver unit 2020, configured to receive a first instruction; and a processing unit 2030, configured to control display of the parking location of the vehicle according to the first instruction, where the parking location includes a parking space number indicated by the parking space number information.

In some possible implementations, the second transceiver unit 2020 is further configured to receive a second instruction; and the processing unit 2030 is further configured to control, according to the second instruction, display of a first image of a parking space in which the vehicle is located, where the first image includes the parking space number.

In some possible implementations, the processing unit 2030 is specifically configured to: control display of a first text and a first image according to the first instruction, where the first text includes an address of the parking location, or the first text includes an address of the parking location and the parking space number.

In some possible implementations, the processing unit 2030 is specifically configured to: when receiving the first instruction, control a display interface to switch from a first interface to a second interface; and display the parking location on the second interface.

In some possible implementations, the second interface includes one or more cards, and the parking location is displayed in one of the one or more cards.

In some possible implementations, the second transceiver unit 2020 is further configured to receive a third instruction; and the processing unit 2030 is specifically configured to: control, according to the first instruction, a display interface of a first application to display the parking location, where the parking location includes a second image indicating environmental information around the parking location; and switch, according to the third instruction, the second image displayed on the display interface of the first application.

In some possible implementations, the second transceiver unit 2020 is further configured to: after the processing unit 2030 controls, according to the first instruction, the display interface of the first application to display the parking location, receive a fourth instruction; and the processing unit 2030 is further configured to: control, according to the fourth instruction, the display interface of the first application to display information about a track between a first position and the vehicle.

In some possible implementations, the display interface of the first application includes a first control, and the second transceiver unit 2020 is further configured to: receive a fifth instruction for the first control, where the first control is associated with a second application; and the processing unit 2030 is further configured to control, according to the fifth instruction, a display interface of the second application to display the information about the track between the first position and the vehicle.

In some possible implementations, the second transceiver unit 2020 is further configured to: after the processing unit 2030 controls display of the parking location of the vehicle according to the first instruction, receive a sixth instruction. The processing unit 2030 is further configured to: send shared information to a first object according to the sixth instruction, where when the first object is an authorized user of the vehicle, the shared information includes the parking location; or when the first object is an unauthorized user of the vehicle, the shared information includes a part of information of the parking location.

In some possible implementations, the parking location further includes at least one of a number of a floor on which the vehicle is parked and a number of an area in which the vehicle is parked.

In some possible implementations, the processing unit 2030 is further configured to: control, according to the fourth instruction, the display interface of the first application to display a first animation, where the first animation is used to prompt that intelligent vehicle searching is enabled.

In some possible implementations, the first image includes an image obtained by performing distortion correction on one or more images obtained by a sensor of the vehicle.

In some possible implementations, the parking space number included in the first image is displayed in an art font.

In some possible implementations, the second image includes an image obtained by splicing a plurality of images obtained by a sensor of the vehicle.

Optionally, if the apparatus is located in the electronic device, the processing unit may be the processor 110 shown in FIG. 1.

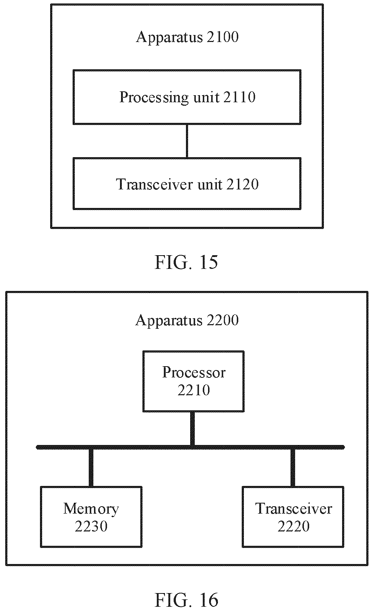

FIG. 15 is a schematic block diagram of a vehicle searching apparatus 2100 according to an embodiment of this application. The apparatus 2100 may be disposed in the vehicle in the foregoing embodiments. The apparatus 2100 includes: a processing unit 2110, configured to determine parking location information of the vehicle based on one or more images captured by a vehicle-mounted camera; and a transceiver unit 2110, configured to send the parking location information of the vehicle to an electronic device, where the parking location information includes parking space number information of a parking location of the vehicle.

It should be noted that for a method for determining the parking location information of the vehicle by the processing unit 2110, refer to the description in the foregoing embodiments. Details are not described herein again.

It should be understood that division into units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of each unit of the apparatus. The processor is, for example, a general-purpose processor like a central processing unit (central processing unit, CPU), or a microprocessor. The memory is a memory inside the apparatus or a memory outside the apparatus. Alternatively, units of the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and functions of some or all of the foregoing units are implemented by designing a logical relationship between elements in the circuits. For another example, in another implementation, the hardware circuits may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between the logic gate circuits, to implement functions of some or all of the foregoing units. All units of the foregoing apparatus may be implemented in a form of software invoked by a processor; or all units may be implemented in a form of a hardware circuit; or some units may be implemented in a form of software invoked by a processor, and a remaining part may be implemented in a form of a hardware circuit.

In embodiments of this application, the processor is a circuit that has a signal processing capability. In an implementation, the processor may be a circuit that has an instruction reading and running capability, for example, a CPU, a microprocessor, a GPU, or a DSP. In another implementation, the processor may implement a specific function by using a logical relationship of hardware circuits. The logical relationship of the hardware circuits is fixed or reconfigurable. For example, the processor is an ASIC, or a hardware circuit implemented by a PLD, like an FPGA. In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a tensor processing unit (tensor processing unit, TPU), and a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the foregoing apparatus may be integrated, or may be independently implemented. In an implementation, the units may be integrated together and implemented in a form of a system-on-a-chip (system-on-a-chip, SOC). The SOC may include at least one processor, configured to implement any one of the foregoing methods or implement functions of each unit of the apparatus. Types of the at least one processor may be different, for example, include a CPU and an FPGA, a CPU and an artificial intelligence processor, a CPU and a GPU, and the like.

During specific implementation, operations performed by the first transceiver unit 2010, the second transceiver unit 2020, and the processing unit 2030 may be controlled by a same processor, or may be controlled by different processors, for example, separately controlled by a plurality of processors. For example, one or more processors may be connected to the mobile communication module 150 or the wireless communication module 160 in FIG. 1, to control receiving and processing of parking location information of a vehicle from the vehicle or a cloud. For another example, one or more processors may be connected to one or more sensors in the sensor module 180, to control obtaining and processing of a touch signal on a touchscreen or a pressure signal on a physical button. For another example, one or more processors may be connected to the display 194, to control, based on a touch signal on a touchscreen or a pressure signal on a physical button, the display 194 to display a parking location of a vehicle. For example, during specific implementation, the apparatus 2000 may be a chip disposed in the electronic device.

An embodiment of this application further provides an apparatus. The apparatus includes a processing unit and a storage unit. The storage unit is configured to store instructions, and the processing unit executes the instructions stored in the storage unit, so that the apparatus performs the method or step performed in the foregoing embodiments.

FIG. 16 is a schematic block diagram of a vehicle searching apparatus according to an embodiment of this application. The vehicle searching apparatus 2200 shown in FIG. 16 may include a processor 2210, a transceiver 2220, and a memory 2230. The processor 2210, the transceiver 2220, and the memory 2230 are connected through an intemal connection path. The memory 2230 is configured to store instructions. The processor 2210 is configured to execute the instructions stored in the memory 2230, so that the transceiver 2220 receives/sends some parameters. Optionally, the memory 2230 may be coupled to the processor 2210 through an interface, or may be integrated with the processor 2210.

It should be noted that the transceiver 2220 may include but is not limited to a transceiver apparatus like an input/output interface (input/output interface), to implement communication between the apparatus 2200 and another device or a communication network.

In some possible implementations, the apparatus 2200 may be disposed in an electronic device. In this case, the processor 2210 may be the processor 110 shown in FIG. 1, the transceiver 2220 may be the mobile communication module 150 and/or the wireless communication module 160 in FIG. 1, and the memory 2230 may be the internal memory 121 in FIG. 1.

In some possible implementations, the apparatus 2200 may be disposed in a vehicle. In this case, the processor 2210 may be a general-purpose CPU, a microprocessor, an ASIC, a GPU, or one or more integrated circuits, and is configured to execute a related program, to implement the method for controlling a light display device in the method embodiments of this application. The processor 2210 may alternatively be an integrated circuit chip and has a signal processing capability. During specific implementation, steps of the method for controlling a light display device in this application may be completed by using a hardware integrated logic circuit in the processor 2210, or by using instructions in a form of software. The processor 2210 may alternatively be a general-purpose processor, a DSP, an ASIC, an FPGA or another programmable logic device, a discrete gate or transistor logic device, or a discrete hardware component, and may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 2230. The processor 2210 reads information in the memory 2230, and performs, in combination with hardware of the processor 2210, the method for controlling a light display device in the method embodiments of this application.

The memory 2230 may be a read-only memory (read-only memory, ROM), a static storage device, a dynamic storage device, or a random access memory (random access memory, RAM).

The transceiver 2220 uses a transceiver apparatus, for example but not limited to, a transceiver, to implement communication between the apparatus 2200 and another device or a communication network. For example, when the apparatus 2200 is disposed in the vehicle, parking location information of the vehicle may be sent through the transceiver 2220. When the apparatus 2200 is disposed in the electronic device, parking location information of the vehicle may be received through the transceiver 2220.

An embodiment of this application further provides a vehicle searching system. The vehicle searching system includes the apparatus 2000 shown in FIG. 14 and the apparatus 2100 shown in FIG. 15. Alternatively, the vehicle searching system includes the apparatus 2200 shown in FIG. 16. For example, the apparatus 2100 sends parking location information of a vehicle to the apparatus 2000, and the apparatus 2000 displays a parking location of the vehicle based on the parking location information. The parking location includes a parking space number indicated by the parking location information.

An embodiment of this application further provides a computer program product. The computer program product includes computer program code. When the computer program code is run on a computer, the computer is enabled to implement the methods in the embodiments shown in FIG. 5 to FIG. 13.

An embodiment of this application further provides a computer-readable storage medium. The computer-readable medium stores computer instructions. When the computer instructions are run on a computer, the computer is enabled to implement the methods in the embodiments shown in FIG. 5 to FIG. 13.

An embodiment of this application further provides a chip, including a processor, configured to read instructions stored in a memory. When the processor executes the instructions, the chip is enabled to implement the methods in the embodiments shown in FIG. 5 to FIG. 13.

During implementation, steps in the foregoing methods may be implemented by using a hardware integrated logic circuit in the processor, or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that, in embodiments of this application, the memory may include a read-only memory (read-only memory, ROM) and a random access memory (random access memory, RAM), and provide instructions and data for the processor.

Terms used in embodiments of this application are used only for the purpose of describing specific embodiments, but are not intended to limit this application. Terms "one", "a", "the", "the foregoing", "this", and "the one" of singular forms used in this specification and the appended claims of this application are also intended to include plural forms such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. Terms "include", "contain", "have", and their variants all mean "include but are not limited to", unless otherwise specifically emphasized in another manner.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle searching method, comprising:
receiving parking location information of a vehicle, wherein the parking location information comprises parking space number information of a parking location of the vehicle; and
receiving a first instruction, and controlling display of the parking location of the vehicle according to the first instruction, wherein the parking location comprises a parking space number indicated by the parking space number information.

2. The method according to claim 1, wherein the method further comprises:
receiving a second instruction, and controlling, according to the second instruction, display of a first image of a parking space in which the vehicle is located, wherein the first image comprises the parking space number.

3. The method according to claim 1, wherein the controlling display of the parking location of the vehicle according to the first instruction comprises:
controlling display of a first text and a first image according to the first instruction, wherein the first text comprises an address of the parking location, or the first text comprises an address of the parking location and the parking space number, and the first image comprises a parking space in which the vehicle is located.

4. The method according to any one of claims 1 to 3, wherein the controlling display of the parking location of the vehicle according to the first instruction comprises:
when receiving the first instruction, controlling a display interface to switch from a first interface to a second interface; and
displaying the parking location on the second interface.

5. The method according to claim 4, wherein the second interface comprises one or more cards, and the parking location is displayed in one of the one or more cards.

6. The method according to any one of claims 1 to 5, wherein the method further comprises:
receiving a third instruction; and
the controlling display of the parking location of the vehicle according to the first instruction comprises:
controlling, according to the first instruction, a display interface of a first application to display the parking location, wherein the parking location comprises a second image indicating environmental information around the parking location; and
switching, according to the third instruction, the second image displayed on the display interface of the first application.

7. The method according to claim 6, wherein the method further comprises:
receiving a fourth instruction, and controlling, according to the fourth instruction, the display interface of the first application to display information about a track between a first position and the vehicle.

8. The method according to claim 7, wherein the display interface of the first application comprises a first control, and the method further comprises:
receiving a fifth instruction for the first control, wherein the first control is associated with a second application; and
controlling, according to the fifth instruction, a display interface of the second application to display the information about the track between the first position and the vehicle.

9. The method according to any one of claims 1 to 8, wherein the method further comprises:
receiving a sixth instruction, and sending shared information to a first object according to the sixth instruction, wherein
when the first object is an authorized user of the vehicle, the shared information comprises the parking location; or when the first object is an unauthorized user of the vehicle, the shared information comprises a part of information of the parking location.

10. The method according to any one of claims 1 to 9, wherein the parking location further comprises at least one of a number of a floor on which the vehicle is parked and a number of an area in which the vehicle is parked.

11. The method according to claim 7, wherein the method further comprises:
controlling, according to the fourth instruction, the display interface of the first application to display a first animation, wherein the first animation is used to prompt that intelligent vehicle searching is enabled.

12. The method according to claim 2 or 3, wherein the first image comprises an image obtained by performing distortion correction on one or more images obtained by a sensor of the vehicle.

13. The method according to claim 6, wherein the second image comprises an image obtained by splicing a plurality of images obtained by a sensor of the vehicle.

14. A vehicle searching apparatus, comprising:
a first transceiver unit, configured to receive parking location information of a vehicle, wherein the parking location information comprises parking space number information of a parking location of the vehicle;
a second transceiver unit, configured to receive a first instruction; and
a processing unit, configured to control display of the parking location of the vehicle according to the first instruction, wherein the parking location comprises a parking space number indicated by the parking space number information.

15. The apparatus according to claim 14, wherein the second transceiver unit is further configured to receive a second instruction; and
the processing unit is further configured to control, according to the second instruction, display of a first image of a parking space in which the vehicle is located, wherein the first image comprises the parking space number.

16. The apparatus according to claim 14, wherein the processing unit is specifically configured to:
control display of a first text and a first image according to the first instruction, wherein the first text comprises an address of the parking location, or the first text comprises an address of the parking location and the parking space number.

17. The apparatus according to any one of claims 14 to 16, wherein the processing unit is specifically configured to:
when receiving the first instruction, control a display interface to switch from a first interface to a second interface; and
display the parking location on the second interface.

18. The apparatus according to claim 17, wherein the second interface comprises one or more cards, and the parking location is displayed in one of the one or more cards.

19. The apparatus according to any one of claims 14 to 18, wherein the second transceiver unit is further configured to receive a third instruction; and
the processing unit is specifically configured to:
control, according to the first instruction, a display interface of a first application to display the parking location, wherein the parking location comprises a second image indicating environmental information around the parking location; and
switch, according to the third instruction, the second image displayed on the display interface of the first application.

20. The apparatus according to claim 19, wherein the second transceiver unit is further configured to:
receive a fourth instruction; and
the processing unit is further configured to control, according to the fourth instruction, the display interface of the first application to display information about a track between a first position and the vehicle.

21. The apparatus according to claim 20, wherein the display interface of the first application comprises a first control, and the second transceiver unit is further configured to:
receive a fifth instruction for the first control, wherein the first control is associated with a second application; and
the processing unit is further configured to control, according to the fifth instruction, a display interface of the second application to display the information about the track between the first position and the vehicle.

22. The apparatus according to any one of claims 14 to 21, wherein the second transceiver unit is further configured to:
receive a sixth instruction; and
the processing unit is further configured to send shared information to a first object according to the sixth instruction, wherein
when the first object is an authorized user of the vehicle, the shared information comprises the parking location; or when the first object is an unauthorized user of the vehicle, the shared information comprises a part of information of the parking location.

23. The apparatus according to any one of claims 14 to 22, wherein the parking location further comprises at least one of a number of a floor on which the vehicle is parked and a number of an area in which the vehicle is parked.

24. The apparatus according to claim 20, wherein the processing unit is configured to:
control, according to the fourth instruction, the display interface of the first application to display a first animation, wherein the first animation is used to prompt that intelligent vehicle searching is enabled.

25. The apparatus according to claim 15 or 16, wherein the first image comprises an image obtained by performing distortion correction on one or more images obtained by a sensor of the vehicle.

26. The apparatus according to claim 19, wherein the second image comprises an image obtained by splicing a plurality of images obtained by a sensor of the vehicle.

27. An electronic device, comprising:
a memory, configured to store a computer program; and
a processor, configured to execute the computer program stored in the memory, so that the electronic device performs the method according to any one of claims 1 to 13.

28. A vehicle searching system, comprising the apparatus according to any one of claims 14 to 26, or the electronic device according to claim 27, and a vehicle.

29. A computer-readable storage medium, wherein the computer-readable storage medium stores a computer program, and when the computer program is executed by a computer, the method according to any one of claims 1 to 13 is implemented.
